# EUROPEAN PATENT APPLICATION

(11) **EP 4 023 418 A1**
(43) Date of publication of application: **06.07.2022**
(21) Application number: 19948534.3
(22) Date of filing: 03.12.2019
(51) Int. Cl.: B29C 64/393, B29C 64/386, B29C 64/20, B29C 64/124, B33Y 50/02, B33Y 50/00, B33Y 30/00, B33Y 10/00

(54) **LAYERED PROCESSING METHOD OF THREE-DIMENSIONAL OBJECT DATA AND 3D PRINTING DEVICE**

(30) Priority: 12.10.2019 CN 201910968670
(71) Applicant: Shanghai Union Technology Corporation, Shanghai 201612 (CN)
(72) Inventor: CHEN, Xianfei, Shanghai 201612 (CN); YU, Qingxiao, Shanghai 201612 (CN); WANG, Jincheng, Shanghai 201612 (CN)
(74) Representative: Böhm, Brigitte
(86) International application number: PCT/CN2019/122747
(87) International publication number: WO 2021/068386

(57) **Abstract**

A layered processing method and system of a three-dimensional object data, and a 3D printing method, a 3D printing device, a computer device, and a computer readable storage medium. By using the characteristics that a material to be cured can display color appearance with the distinction degree after over-curing, a certain distinction degree such as color and structure sudden change (or step change) is needed in the appearance to recognize an object with different portions carrying information, in the pretreatment, on the basis of the relations of dependence, a three-dimensional attachment model and a three-dimensional subject model are mounted, and are subjected to layered processing, an over-curing property is provided, in the subsequent printing process, on the basis of the obtained slicing data, at least one part is sliced to carry out over-curing with the set rule, in the printing process, different exposure strategies are adopted, and in one-time printing, the three-dimensional object with recognized assembling information or configuration information is obtained, the production process is simplified, and the production cost is reduced

## Description

### Technical Field

The present application relates to the field of 3D printing, in particular to a layered processing method of 3D object data, a layered processing system, a 3D printing method, a 3D printing device, a computer device and a computer readable storage medium.

### Background Art

3D printing is a type of rapid prototyping technology, specifically a technology in which objects are constructed by printing layer by layer based on digital model files and using bondable or cured materials such as powdered metals, plastics and resins. A 3D printing device manufactures 3D objects by performing the printing technology. The 3D printing device is widely used in the fields of molds, customized goods, medical devices, prostheses and the like due to its high molding precision.

Wherein, when a model is manufactured, the model is usually printed layer by layer in a manner of layered slicing processing, and the light-curing material between the printing reference surface and the model is cured to form a pattern cured layer, and the above steps are repeated to form a printed structure accumulated by the pattern cured layer on the build platform. For the actually printed structures, such as teeth, biological organs, etc., a certain distinction degree in appearance is required such as color and sudden changes (or steps) in structure to identify the information carried by different parts. However, the existing layered processing method and the printing method use a uniform exposure strategy for the same pattern cured layer, making it difficult to show the distinguishing information in appearance.

### Summary of the Invention

In view of the above shortcomings of the prior art, the objective of the present application is to provide a layered processing method, for solving the problems of the prior art that the printed products at the pre-processing stage and implemented according to the pre-processing measures do not have structural appearance distinction characteristics or have a low degree of distinction, and for products that need to display a certain pattern color, the structure needs to be split and printed with different materials.

In view of the above-mentioned shortcomings in the prior art, an object of the present application is providing a 3D printing method, applied to a 3D printing device, wherein the 3D printing device comprises: an energy radiation device for radiating energy to a printing surface, and a build platform for carrying a three-dimensional object cured by energy radiation, wherein the 3D printing method comprises: acquiring sliced data of the three-dimensional object model; wherein the three-dimensional object model comprises a three-dimensional subject model and a three-dimensional attachment model with an attachment relationship; wherein at least part of attachment slices in the three-dimensional attachment model are set with an over-curing property; adjusting spacing between the build platform and the printing surface to fill with materials to be cured; wherein layer height of filled materials to be cured corresponds to the layer height of the corresponding subject slice in the three-dimensional subject model, and/or the layer height of the corresponding attachment slice in the three-dimensional attachment model; radiating energy to the filled materials to be cured based on a layered image of the corresponding subject slice in the three-dimensional subject model and/or a layered image of the corresponding attachment slice in the three-dimensional attachment model, to obtain a corresponding pattern cured layer; and repeating each of the above steps to accumulate pattern cured layers on the build platform to form the three-dimensional object corresponding to the three-dimensional object model; wherein, during the radiation, performing over-cured radiation on at least part of the layered image of the corresponding attachment slice according to the over-curing property.

In some embodiments of the first aspect, wherein the step of adjusting spacing between the build platform and the printing surface to fill the printing surface with materials to be cured comprises any of the following: adjusting the spacing between the build platform and the printing surface based on a unified layer height when the layer heights of the slices in the three-dimensional subject model and the slices in the three-dimensional attachment model are consistent; and when the layer heights of the slices in the three-dimensional subject model and the slices in the three-dimensional attachment model are not consistent, adjusting the spacing between the build platform and the printing surface based on the difference in layer heights of adjacent slices in the three-dimensional object model, so that the filled materials to be cured are configured to form the corresponding pattern cured layer.

In some embodiments of the first aspect, wherein the step of performing over-cured radiation on at least part of the layered image of the corresponding attachment slice according to the over-curing property includes any of the following: controlling the energy radiation device to perform energy radiation based on the grayscale value of at least the contour region in the layered image of the attachment slice, to over-cure the materials to be cured corresponding to at least the contour region in the printing surface, so as to obtain a corresponding pattern cured layer; controlling the energy radiation device to perform energy radiation based on the contour mask image of the corresponding contour region in the layered image of the attachment slice, to over-cure the materials to be cured corresponding to contour region in the printing surface, so as to obtain the corresponding contour structure of the pattern cured layer; and controlling the energy radiation device to perform energy radiation based on the over-curing label of the attachment slice, to over-cure the materials to be cured in the printing surface to obtain the corresponding pattern cured layer.

In some embodiments of the first aspect, wherein the step of controlling the energy radiation device to perform energy radiation includes: controlling at least one of the radiation duration, light intensity, and irradiation times of the energy radiation device.

In some embodiments of the first aspect, wherein the obtained three-dimensional object comprises at least one of the following attachment objects: an attachment object configured to enable an external device to identify the assembly position of the manufactured subject object; and an attachment object configured to enable an external device to identify the configuration information of the manufactured subject object.

In some embodiments of the first aspect, wherein the three-dimensional object comprises a tooth, an object containing an information code, or a biological organ.

In the second aspect, the present application provides a 3D printing device, comprising: an energy radiation device, configured to radiate energy to a printing surface based on the acquired sliced data of the three-dimensional object model; wherein the three-dimensional object model comprises a three-dimensional subject model and a three-dimensional attachment model with an attachment relationship; wherein at least part of attachment slices in the three-dimensional attachment model are set with an over-curing property; a build platform, configured to attach a pattern cured layer that has been cured after radiation by the energy radiation device, so as to form a corresponding three-dimensional object through accumulation of the pattern cured layer; a Z-axis drive mechanism, connected to the build platform, and configured to adjust spacing between the build platform and the printing surface to fill with materials to be cured; wherein the layer height of the filled materials to be cured corresponds to the layer height of the corresponding subject slice in the three-dimensional subject model, and/or the layer height of the corresponding attachment slice in the three-dimensional attachment model; and a control device, connected to the Z-axis drive mechanism and the energy device, and cofigured to control the Z-axis drive mechanism and the energy radiation device to print the three-dimensional object; wherein under the control of the control device, the energy radiation device controls to radiate energy to the filled materials to be cured based on a layered image of the corresponding subject slice in the three-dimensional subject model and/or a layered image of the corresponding attachment slice in the three-dimensional attachment model, to obtain a corresponding pattern cured layer; and wherein, during the radiation, the energy radiation device performs over-cured radiation on at least part of the layered image of the corresponding attachment slice according to the over-curing property.

In some embodiments of the second aspect, wherein further comprising a container, configured to accommodate the materials to be cured; wherein the energy radiation device is arranged below the bottom surface of the container and radiates energy to the bottom surface of the container, to form the pattern cured layer on the bottom surface of the container; or, the energy radiation device is arranged above the container and radiates energy to the surface of the materials to be cured in the container, to form the pattern cured layer on the surface of the materials to be cured.

In some embodiments of the second aspect, wherein the energy radiation device is an energy radiation device based on surface projection, or an energy radiation device based on scanning radiation.

In some embodiments of the second aspect, wherein the manner through which the Z-axis drive mechanism adjusts the spacing between the build platform and the printing surface includes any of the following: the control device controls the Z-axis drive mechanism to adjust the spacing between the build platform and the printing surface based on the unified layer height when the layer heights of the slices in the three-dimensional subject model and the slices in the three-dimensional attachment model are consistent; and the control device controls the Z-axis drive mechanism to adjust the spacing between the build platform and the printing surface based on the the layered image irradiation sequence set by the layer height of each slice in the three-dimensional subject model and the three-dimensional attachment model when the layer heights of the slices in the three-dimensional subject model and the slices in the three-dimensional attachment model are not consistent.

In some embodiments of the second aspect, wherein the manner through which the energy radiation device performs over-cured radiation on at least part of the layered image of the corresponding attachment slice according to the over-curing property comprises any of the following: the energy radiation device performs energy radiation based on the grayscale value of at least the contour region in the layered image of the attachment slice, to over-cure the materials to be cured corresponding to at least the contour region in the printing surface, so as to obtain a corresponding pattern cured layer; the energy radiation device performs energy radiation based on the contour mask image of the corresponding contour region in the layered image of the attachment slice, to over-cure the materials to be cured corresponding to the contour region in the printing surface, so as to obtain the corresponding contour structure of the pattern cured layer; and the energy radiation device is controlled for energy radiation based on the over-curing label of the attachment slice, to over-cure the materials to be cured in the printing surface to obtain the corresponding pattern cured layer.

In some embodiments of the second aspect, wherein the manner through which the energy radiation device performs energy radaition comprises: performing energy radiation on corresponding radiation positions according to at least one of the radiation duration, light intensity, and irradiation times set based on over-curing operation.

In some embodiments of the second aspect, wherein the manufactured three-dimensional object comprises at least one of the following attachment objects: an attachment object configured to enable an external device to identify the assembly position of the manufactured subject object; and an attachment object configured to enable an external device to identify the configuration information of the manufactured subject object.

In some embodiments of the second aspect, wherein the three-dimensional object comprises a tooth, an object containing an information code, or a biological organ.

As mentioned above, the layered processing method, system and 3D printing method and device of three-dimensional object models of the present application have the following beneficial effects: by using the property that the materials to be cured can display a color appearance with a distinction degree after over-curing, for three-dimensional objects that need to have identifiable attachment objects, for example, objects that need to have a distinction degree in appearance such as color and sudden changes (or steps) in structure to identify the information carried by different parts, during pre-processing, a three-dimensional attachment model and a three-dimensional subject model are placed based on the attachment relationship, are subjected to layered processing and set with an over-curing property, and during subsequent printing, at least part of the slices are over-cured with set rules based on the acquired sliced data, and different exposure strategies are adopted during printing, to obtain three-dimensional objects with identifiable assembly information or configuration information during a single printing, thereby simplifying the printing process, lowering the production cost, and reducing the risk of abrasion caused by object assembly.

### Brief Description of the Drawings

Fig. 1 shows a flow diagram of a layered processing method of the present application in one embodiment.
Fig. 2 shows a flow diagram of a layered processing method of the present application in another embodiment.
Fig. 3 is a flow diagram of layered processing of a layered processing system of the present application in an embodiment.
Fig. 4 is a flow diagram of layered processing of a layered processing system of the present application in another embodiment.
Fig. 5 shows a flow diagram of a 3D printing method of the present application in an embodiment.
Fig. 6 shows a schematic diagram of a simplified structure of a 3D printing device of the present application in an embodiment.

### Detailed Description of the Embodiments

Implementations of the present application will be described below through specific embodiments, and those skilled in the art can easily understand other advantages and effects of the present application from the contents disclosed in the present specification.

In the following description, several embodiments of this application are described combined with the drawings. However, it should be understood that other embodiments may be available, and any changes in mechanical composition, structure, electrical and operation may be made without departing from the spirit and scope of the application. The following detailed description is not to be considered as limited, and the scope of the embodiments of the present invention is defined by the appended claims. The terminology used herein is only for describing particular embodiments, and not limit the application, spatial-related terms such as "up", "down", "left", "right", "below", "top", "above", "bottom", etc., may be used in the text for illustrating the relationship of one element or feature to another element or feature.

Furthermore, as used herein, such single forms as "one", "a" and "the" aim at also including the plural forms, unless contrarily indicated in the text. It should be further understood that, such terms as "comprise" and "include" indicate the existence of the features, steps, operations, elements, components, items, types and/or groups, but do not exclude the existence, emergence or addition of one or more other features, steps, operations, elements, components, items, types and/or groups. The terms "or" and "and/or" used herein are explained to be inclusive, or indicate any one or any combination.

It should be noted that the structures, proportions, sizes, etc. shown in the drawings in this specification are only used to cooperate with the contents disclosed in the specification, so as to be understood and read by those who are familiar with the technology, and are not intended to limit the present application The limited conditions that can be implemented have no technical significance, and any modification of the structure, change of the proportional relationship or adjustment of the size, without affecting the effect that the application can produce and the purpose that can be achieved, should still fall. It is within the scope that the technical content disclosed in this application can cover.

Generally speaking, a 3D printing device includes a container, an energy radiation device, a Z-axis drive mechanism, a build platform and a control device, and energy radiation is performed on light-curing materials to cure to obtain 3D printed objects such as molds, medical devices, custom goods, etc. After determining the structural parameters of the three-dimensional object model to be printed, the three-dimensional object model is pre-processed to generate sliced data including at least the layer height and sliced figures or scanning path that can realize the printing process of layer-by-layer curing, and then printing is performed based on each sliced data, and the cured layers are accumulated layer by layer to obtain a structurally complete 3D printed object. In practice, when products with identifiable marked information are printed, such as a certain color gradient exists between the product appearance marked part and the main body, it is usually difficult to obtain a complete product that meets the design goals through 3D printing, and the product needs to appear pattern identification, the product structure generally needs to be disassembled and printed with different materials, and then the disassembled structure is assembled.

The energy radiation device is an energy radiation device based on surface projection or an energy radiation device based on scanning radiation. In common 3D printing devices such as DLP (Digital Light Procession, DLP for short) devices based on bottom exposure, the energy radiation device is a projection device based on face projection, including a DMD chip, a controller and a storage module, etc. Wherein the storage module stores a layered image which performs layered processing on the 3D object model. The DMD chip irradiates a light source of each pixel on the corresponding layered image to the bottom surface of the container after receiving a control signal from the controller. Wherein the DMD chip looks like a small piece of mirror and is encapsulated in a closed space made of metal and glass. In fact, the mirror is composed of hundreds of thousands or even millions of micro-mirrors, each micro-mirror represents a pixel, and the projected image is composed of these pixels. The DMD chip can be simply described as a semiconductor optical switch and a micro-mirror corresponding to the pixel points, and the controller allows/prohibits each micro-chip to reflect light by controlling each optical switch in the DMD chip, therefore, the corresponding layered image is irradiated onto the light-curing material through the transparent bottom of the container, such that the light-curing material corresponding to the image shape is cured to obtain a pattern cured layer.

The energy radiation device is also the commonly-seen SLA (Stereo lithography Apparatus) device, for an SLA device with bottom exposure or top exposure, the energy radiation device is an energy radiation device based on scanning radiation, including a laser emitter, a lens group located on the light emitting path of the laser emitter, a lens group located on the light emitting side of the lens group, and a motor controlling the galvanometer, wherein the laser emitter controllably adjusts the energy of the output laser beam, for example, the laser emitter controllably emits a laser beam of a preset power and stops emitting the laser beam, and for another example, the laser emitter controllably increases the power of the laser beam and decreases the power of the laser beam. The lens group is used to adjust the focusing position of the laser beam, the galvanometer group is used to controllably scan the laser beam in a two-dimensional space on the bottom or top surface of the container, the light-curing material scanned by the beam is cured into the corresponding pattern cured layer, and the oscillation of the galvanometer of the galvanometer group determines the scanning size of the SLA device.

The energy radiation device is also a commonly-seen LCD (Liquid Crystal Display) device based on bottom exposure, and the energy radiation system is an LCD liquid crystal screen light source system. The LCD includes an LCD liquid crystal screen located under the container, and a light source arranged just under the LCD liquid crystal screen. The control chip in the energy radiation device projects the layered image of the slice to be printed onto a printing surface through the LCD liquid crystal screen, and the pattern radiation surface provided by the LCD liquid crystal screen is used to cure the materials to be cured in the container into a corresponding pattern cured layer.

Commonly, in a bottom-exposed device (e.g., a DLP or LCD device), the build platform is suspended in the upper part of the printing reference surface, and in a top-exposed device (e.g., a DLP or SLA device), the build platform is suspended in the lower part of the printing reference surface (usually the liquid surface of the resin slot) for attaching and accumulating the pattern cured layer cured by irradiation. Typically, the material of the build platform is different from the light-curing material. The build platform is driven by the Z-axis drive mechanism in the 3D printing device and moves in the Z-axis (vertical) direction, so that the materials to be cured is filled between the build platform and the printing reference surface, thereby allowing the energy radiation system in the 3D printing device to irradiate the materials to be cured by energy radiation, and causing the irradiated materials to be cured and accumulated on the build platform. In order to precisely control the irradiation energy of each cured layer, the build platform and the attached manufactured three-dimensional object portion need to be moved to a position where the minimum spacing from the printing reference surface is the layer thickness of the cured layer to be cured, and the Z-axis drive mechanism drives the build platform to rise, such that the cured layer is separated from the bottom of the container.

Taking a bottom-exposed device (e.g., a DLP or an LCD device) as an example, when the Z-axis drive mechanism drives the build platform to lower, the build platform or the pattern cured layer attached to the build platform is usually lowered to a spacing which is away from the bottom of the container by the height of a cured layer, to irradiate the light-curing material filled within the spacing. When the Z-axis drive mechanism drives the build platform to rise, the pattern cured layer is usually separated from the bottom of the container.

The control device is connected with the Z-axis drive mechanism and the energy radiation device for controlling the Z-axis drive mechanism and the energy radiation device to print the three-dimensional object. The control device may include: a storage unit, a processing unit, and an interface unit, etc.

The storage unit includes a high-speed random access memory, and may also include a non-volatile memory, such as one or more disk storage devices, flash memory devices, or other non-volatile solid state storage devices. In some embodiments, the storage unit may also include a memory far away from one or more processors, such as network-attached memory accessible via RF circuits or external ports and communication networks (not shown in the figure), wherein the communication networks may be the Internet, one or more intranets, local area networks (LANs), wireless local area networks (WLANs), storage area networks (SANs), etc., or suitable combinations thereof. The memory controller may control access to the memory by other components of the device such as the CPU and peripheral interfaces.

The processing unit includes one or more general purpose microprocessors, one or more application specific integrated circuits (ASICs), one or more field programmable gate arrays (FPGAs), or any combination thereof. The processing units are operably coupled to the memory and/or the non-volatile storage devices. More specifically, the processor may execute instructions stored in the memory and/or the non-volatile storage device to perform operations in the computing device, such as generating image data and/or transferring image data to an electronic display. The processing unit becomes, on the one hand, an industrial control unit for controlling each device to execute in a timing sequence, for example, the processing unit transmits a layered image to the energy radiation device after controlling the Z-axis drive mechanism to lower the build platform to a position which is away from the bottom of the container by one spacing, and after the energy radiation device has finished irradiating the image and performing patterned curing on the light-curing material on the bottom of the container, then the Z-axis drive mechanism is controlled to drive the build platform to rise, so as to separate the corresponding pattern cured layer from the bottom of the container. On the other hand, during the separation, the processing unit also calculates the operating parameters applied to the Z-axis drive mechanism during the separation operation. With the Z-axis drive mechanism containing a drive motor as an example, the faster the rotating speed of the drive motor, the faster the separation operation and the rise of the build platform, and on the contrary, the lower the speed, the lower the separation operation and the rise of the build platform.

The interface unit includes a plurality of interfaces, each interface is respectivley connected with an energy radiation system, a build platform and a Z-axis drive mechanism, respectively. Each interface is configured on the control device according to the actual data transmission protocol, and the processing unit is operably coupled to each interface, so that the control device can interact with the above connected energy radiation system,the build platform, and the Z-axis drive mechanism.

During printing, the control device controls the Z-axis drive mechanism and the energy radiation system to cure the light-cured layer layer by layer. The control device sends the layered images to the energy radiation system one by one according to the preset printing sequence, and the energy radiation system irradiates the images to the transparent bottom of the container or the top of the container, and the irradiated energy cures the light-curing material at the bottom or top of the container into the corresponding pattern cured layer. The control device is further configured to send control instructions to the Z-axis drive mechanism between irradiation intervals, for example, the control device sends control instructions of rising direction and rotating speed to the Z-axis drive mechanism after controlling the exposure device to finish irradiation, the Z-axis drive mechanism rises to a preset height relative to the bottom of the container based on the control instructions, and then the control device sends to the Z-axis drive mechanism control instructions containing lowering direction and rotating speed, such that the Z-axis drive mechanism drives the build platform to move towards the bottom of the container. Throughout the rising and lowering process, the control device determines the spacing between the build platform and the bottom of the container by monitoring the movement of the Z-axis drive mechanism, and outputs a control instruction containing a stopping instruction when the build platform reaches the corresponding spacing. The control device judges whether the 3D object model has completed irradiation of all the layered images, if so, then printing is finished, otherwise, the above printing process is repeated until the printing is complete.

The container is configured to accommodate materials to be cured, the light-curing material includes any liquid material easy to light-curing, the liquid material includes, for example: light-curing resin liquid, or resin liquid doped with powder, color additives and other mixed materials, etc. The doped powder materials include but are not limited to: ceramic powder, color additive powder, etc.

In a 3D printing device based on bottom exposure, the container may be transparent as a whole or only the bottom of the container is transparent. For example, the container is a glass container, and a light-absorbing paper (such as black film or black paper) is attached on the container wall, in order to reduce the curing interference of light-curing materials due to light scattering during projection. A transparent flexible film (not shown in the figure) that is easy to peel off is paved on the bottom surface of the container.

Before the 3D printing device executes the printing process, the layered data of the printed target needs to be generated during pre-processing, and the layered data includes the layered processing method of the complete printed target, such as the configured layer height of each layer and the layered (sliced) figures of each layer. The layered (sliced) figures are obtained by cross-sectional division of the 3D component model along the Z-axis direction (that is, along the height direction) in advance. Wherein, a sliced figure outlined by the contour of the 3D component model is formed on the cross-sectional layer formed by each adjacent cross-sectional division. If the cross-sectional layer is sufficiently thin, it can be determined that the contour lines of the upper cross-sectional surface and the lower cross-sectional surface of the cross-sectional surface layer are the same. For 3D printing device based on surface projection, each sliced figure needs to be described into a layered image. For 3D printing device based on scanning irradiation, each sliced figure is described by coordinate data on the scanning path.

The term "scanning" as used herein is not limited to continuously moving (running) a point of the high energy beam above a surface, but also includes a series of separate discrete exposures (hops). For example, the optical device may direct the high energy beam to expose a first position to the beam, subsequently the beam is disconnected, and when the high energy beam is turned on again, the optical device is reoriented to direct the energy beam to a second position spaced from the first position. The high energy beam is a beam having sufficient energy to solidify the material.

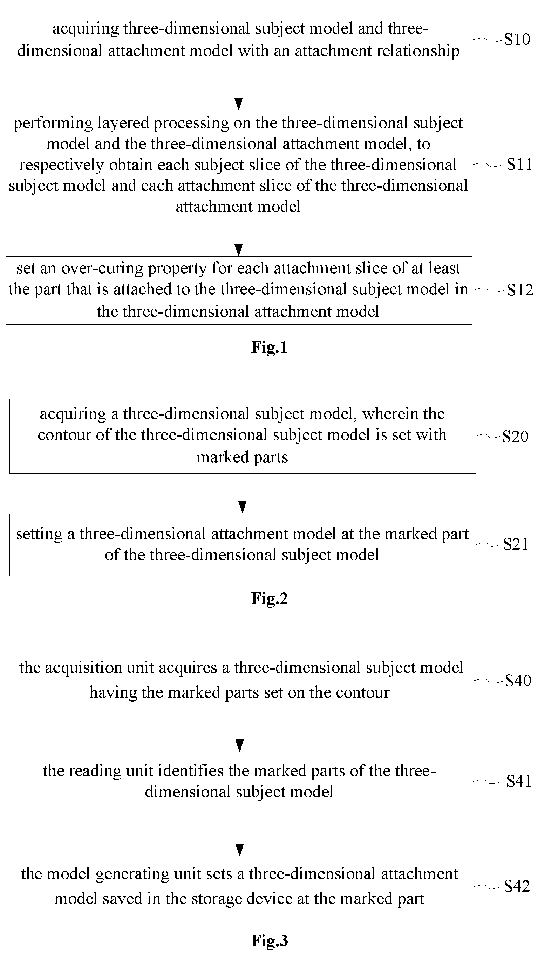

Please refer to Fig. 1 which shows a flow chart of a layered processing method of a three-dimensional object model provided in the present application, as shown in the figure, the present application provides a layered processing method of a three-dimensional object model applied to the 3D printing device adopting the aforementioned SLA, DLP or LCD device, wherein the layered processing method includes the following steps:
In step S10, a three-dimensional subject model and a three-dimensional attachment model with an attachment relationship are acquired; in step S11, the three-dimensional subject model and the three-dimensional attachment model are subjected to layered processing, to respectively obtain each subject slice of the three-dimensional subject model and each attachment slice of the three-dimensional attachment model, respectively; in step S12, based on the attachment relationship, at least part of the attachment slices of the three-dimensional attachment model are set with over-curing property.

In the curing process of 3D printing, the light-curing material within a preset layer thickness is cured based on the projected figure or scanning path through the radiation energy of the energy radiation device. The object form of the light-curing material changes from liquid to solid during the curing process, and the energy density or the energy sum received in the radiation region of a determined layer thickness determines the object form after the curing is completed, and the object form can be controlled by controlling the radiation duration, light intensity, or the irradiation times in printing. In the normal curing state, the completion of the single-layer curing is characterized by complete curing of the sliced figure.

In the present application, based on the change characteristics such as color other than the change in object form of the light-curing material during the process of receiving the radiation energy, the structure that needs to be distinguished in appearance is set with an over-curing property. The over-curing property means that the light-curing material continues to receive a certain amount of radiation after it is completely cured, and the over-cured material still remains solid in the object form but exhibits an over-cured patterned color, usually the color changes, so that there is a color gradient in appearance with the structure set to be normally cured.

For example, in an embodiment, the three-dimensional object model may be a heart model with a blood vessel structure, wherein the heart muscle part can be regarded as a three-dimensional subject model, and the blood vessel structure or blood vessel veins can be regarded as a three-dimensional attachment model, the attachment relationship is now the containment relationship, and the three-dimensional object model has an internal distinguishing structure. The sliced figure or scanning path obtained by performing layered processing on the three-dimensional object model is the external contour of the heart model. Through the existing technical means, the muscle structure and the blood vessel structure of the heart model need to be separated and printed separately and then assembled to obtain the heart model structure with a distinction degree, however, in addition to low efficiency and cumbersome process due to the need for assembly, the method also has the risk of damaging the printed object, especially for the printed entity that is a small blood vessel. In an implementation of the present embodiment, the heart model is printed with a material that shows transparency after curing, and the three-dimensional attachment model, that is, the blood vessel structure, is set with an over-curing property. The muscle part of the heart body is normally cured to form a visible heart model of a blood vessel structure.

For example, in another implementation, the three-dimensional object model may be set to a model with a distinguishing structure in appearance such as a sudden change in structure or color on the external contour or inner contour. For example, the three-dimensional object model is an object model containing an information code such as a two-dimensional code, wherein the object subject model is a three-dimensional subject model and the identification model carrying the information code is a three-dimensional attachment model. The identification model carrying the information code may be a structure such as a 3D two-dimensional code formed by stretching with the information code figure as a cross section, for example, the information represented as "0" in the 3D two-dimensional code is a recessed part of a color gradient, the information represented as "1" is a raised part of another color gradient, and for another example, the information represented as "0" in the 3D two-dimensional code is normally cured, and the information represented as "1" is an over-cured part. In actual use, the function of information codes such as two-dimensional codes is realized by scanning to acquire an identifiable two-dimensional code pattern. In the application of the present application, the over-curing property can be set on the whole or at least the upper surface of the three-dimensional attachment model, i.e., the identification model carrying the two-dimensional code, and the three-dimensional object model formed by the three-dimensional attachment model and the three-dimensional subject model can provide or enhance the gradient of image identification to realize preset functions.

For example, in a further embodiment, the three-dimensional subject model and three-dimensional attachment model are a tooth subject model and a gum line identification model, respectively. The tooth model is usually applied in the production of a tooth film by pressing a film on the tooth model and cutting off the part below the gum to form a usable film sleeve. In an implementation of the present embodiment, the over-curing property is set for the three-dimensional attachment model, i.e., the whole gum line identification model or the visible part of the gum line identification model in the overall model, i.e., the external contour, and the gum line structure after printing is completed has the over-cured distinguishing color in the integrated model composed of the gum line and the tooth body, to facilitate the cutting out of the part below the gum line after subsequent film pressing of the overall tooth model, identification can be performed through the raised structure of the gum line, and automatic or manual cutting can be realized based on the color gradient that identifies the appearance of the model.

In some embodiments of the present application, the three-dimensional subject model may also be a biological organ subject model such as a muscle structure, and the three-dimensional attachment model is at least one of a blood vessel model, a nervous model or a skeleton model, etc., but it is not limited hereto, and any object that is subjected to 3D printing through the over-curing idea of the present application falls within the implementable scope of the present application.

The three-dimensional subject model and three-dimensional attachment model may be at least two relatively independent detachable models, or may also be models with integrated display of at least two structures with an intersecting or interpenetrating relationship, that is, the attachment relationship may be mutual independence, mutual penetration or containment. In actual manufacturing, the entirety composed of the three-dimensional subject model and the three-dimensional attachment model has information beyond that characterized by the three-dimensional subject model or the three-dimensional attachment model separately, or the model functions or features are enhanced by the attachment relationship. The attachment relationship allows the three-dimensional subject model and the three-dimensional attachment model to have a certain physical bonding point or physical supporting relationship, which can be taken as a sliceable entirety in 3D printing, and a three-dimensional object model containing the three-dimensional subject model and the three-dimensional attachment model with an attachment relationship on the build platform is formed after the layer-by-layer curing of 3D printing is completed.

The attachment relationship between the three-dimensional subject model and the three-dimensional attachment model may be an activity attachment relationship, such as blood vessels and heart muscle. The three-dimensional subject model and the three-dimensional attachment model are relatively independent detachable structures, no intersection is generated between the individual models, but the individual models can be assembled or supported mutually in structure, for example, the blood vessel structure can be placed in a heart muscle model; the attachment relationship can also be an integrated attachment relationship, such as the tooth structure and the gun line, and the information code carrying structure and the object body, an interface surface or an intersecting part exists between the three-dimensional subject model and the three-dimensional attachment model, and the three-dimensional subject model and the three-dimensional attachment model are fixed into an entirety through the interface or the intersecting module.

The three-dimensional subject model and the three-dimensional attachment model further include two independent object models with an attachment relationship, and may also be multiple independent object models with an attachment relationship. The matching setting of the three-dimensional subject model and the three-dimensional attachment model is not limited to the above examples. In different embodiments of the present application, the three-dimensional subject model and the three-dimensional attachment model both represent independent object models with an attachment relationship.

The layered processing method of the three-dimensional object model described in the present application starts with acquiring a three-dimensional subject model and a three-dimensional attachment model with an attachment relationship, as shown in the flow chart of the layered processing method provided in the present application in Fig. 1. In step S10, the three-dimensional subject model and the three-dimensional attachment model with an attachment relationship are acquired, and in an embodiment of the present application, the contour of the three-dimensional subject model is provided with marked parts; a three-dimensional attachment model is set at the corresponding marked parts of the three-dimensional subject model, to obtain a three-dimensional subject model and a three-dimensional attachment model with an attachment relationship.

Wherein, the contour includes an external contour and an inner contour, the external contour is part of the outer surface of the three-dimensional object model, and the inner contour is part of the internal structure surface such as a hole wall and a slot wall in the three-dimensional object model.

In some embodiments of the present application, the marked part includes a structural model configured to identify assembly information of the three-dimensional subject model; the assembly information may be at least one of position information or structural information of the boundary part with the three-dimensional attachment model on the contour of the three-dimensional subject model or the intersected part generated according to the preset spatial position of the three-dimensional subject model and the three-dimensional attachment model. For example, in a heart model, the blood vessel structure as the three-dimensional attachment model is accommodated in the muscle structure, so the marked part is the inner contour of the muscle model of the heart. The marking of the marked part can identify the assembled position of the three-dimensional attachment model or the structure used to realize the assembly, so as to assemble the blood vessel model on the inner contour of the muscle model. For example, in a three-dimensional object model composed of a gum line and a tooth model, the tooth model includes a tooth part model and a tooth seat part model for supporting the tooth part model, and the tooth seat part model may be a 3D model of gum obtained through scanning the oral cavity. The tooth subject model serving as a three-dimensional subject model is marked at the boundary between the gum and the tooth structure, and the mark is identified to obtain the position information where the three-dimensional attachment model, that is, the gum line structure will be assembled.

In some embodiments of the present application, the marked parts include a structural model configured to identify the configuration information of a three-dimensional subject model; the configuration information may be product manufacturing information, such as the manufacturer, an ID of the product, position information of the transfer conveyance place adjacent to the next process or processes in the product production process or other usage assistance information that needs to be added to the product to convey, and maintenance information, etc. The three-dimensional attachment model can serve as an information carrier of configuration information, such as a two-dimensional code carrying model, in this case, the three-dimensional subject model and the three-dimensional attachment model are generally of an integrated attachment relationship. According to a preset spatial position of the three-dimensional subject model and the three-dimensional attachment model, the marked part at least includes the external contour structure that carries the boundary between the three-dimensional attachment model and the three-dimensional subject model. By identifying the marked parts, the spatial position information of the three-dimensional attachment model carrying configuration information can be obtained.

Or, the marked part simultaneously includes a structural model for identifying assembly information of the three-dimensional subject model and a structural model for identifying configuration information of the three-dimensional subject model. The structural models with different identification information can be the same structural model with assembly information and configuration information at the same time, or can also be separately independent structural models.

The layered processing method may be performed in a layered device, the layered device may be a single user device, or a server, wherein the user device includes, but is not limited to: a desktop computer, for example, in the embodiment of tooth model printing, the user device may be located in a dental office and directly access the scanning data of the oral cavity of a patient provided by the scanning device, and construct the corresponding tooth model based on the scanning data. The server includes, but is not limited to: a single server, a cluster of servers, etc.

In an embodiment of the present application, the execution module of the layered processing method in the layered device includes an acquisition module and a layered processing module, for example, the computer as a layered device is equipped with a computer program including an acquisition module and a layered processing module. It should be understood that, the layered processing method in the present embodiment is a symbolized instruction sequence or a symbolized statement sequence that can be used as a computer-executable program or can be converted into an executable program.

In an embodiment of the present application, the acquisition module includes an acquisition unit, a reading unit and a model generating unit.

Please refer to Fig. 2 which shows the acquisition steps for performing the layered processing method provided in the present application by an acquisition module in an embodiment of the present application, as shown in the figure:
In step S20, the acquisition unit acquires a three-dimensional subject model having marked parts set on the contour. The three-dimensional subject model may be from a device or equipment with a storage function, in one implementation of the present application, the three-dimensional subject model is stored in the storage device of the computer device, which is extracted and called by the acquisition module.

In step S21, based on the acquired three-dimensional subject model, the reading unit identifies the marked part of the three-dimensional subject model, and the model generating unit is provided with a three-dimensional attachment model saved in the storage device at the marked part, to obtain a three-dimensional subject model and a three-dimensional attachment model with an attachment relationship.

For example, in the embodiment of performing layered processing on the heart model, the acquisition module acquires a heart muscle model with marks set on the inner contour and sets a blood vessel model at the inner contour to obtain a muscle model and a blood vessel model with an attachment relationship.

For example, in an embodiment of the layered processing of an object model containing an information code, the acquisition module acquires an object subject model having a marked part on the base surface, and sets an information code carrying model at the base model, to obtain the information code carrying model and the object subject model with an attachment relationship.

For example, in the embodiment of layered processing of the tooth subject model and the gum line identification model, the acquisition module acquires a tooth model having a marked part at the intersection of the tooth subject structure and the gum structure, and sets a gum line identification model at the marked part, to obtain the tooth subject model and the gum line identification model with an attachment relationship.

The layered processing module is configured to execute layered instructions, to slice (layer) the three-dimensional subject model and the three-dimensional attachment model according to the layered processing method provided in the present application, and to realize the layered effect according to its layered steps. The layered instructions are generated by the program of the layered processing method.

Please continue to refer to Fig. 1, in one embodiment, the step S11 of performing slicing on the three-dimensional subject body and the three-dimensional attachment model includes performing layered processing on the three-dimensional subject model and the three-dimensional attachment model according to a unified layer height; in step S11, the layered processing module performs layered processing on the three-dimensional subject model and the three-dimensional attachment model according to the unified layer height, that is, the three-dimensional subject model and the three-dimensional attachment model are integrated as a three-dimensional object model in the process of setting the layer height, that is, the three-dimensional subject model and the three-dimensional attachment model are sliced, the three-dimensional object model is subjected to preset layer height assignment without distinguishing the three-dimensional subject model and the three-dimensional attachment model with an attachment relationship.

Or in another embodiment, the three-dimensional subject model and the three-dimensional attachment model are layered separately according to the separately configured layer heights; in step S11, the layered processing module performs layered processing on the three-dimensional subject model and the three-dimensional attachment model according to the separately configured layer heights, the three-dimensional subject model and the three-dimensional attachment model are separately sliced as relatively independent models and marked with layer heights separately.

Alternatively in still another embodiment, the three-dimensional subject model and the three-dimensional attachment model are sliced simultaneously according to the above two ways. The layer height is just the slicing thickness, which corresponds to the layer thickness of the cured layer in subsequent printing. The layered processing divides the three-dimensional object model into cross-sectional layers of a certain thickness. In step S11, the three-dimensional object model includes three or more three-dimensional attachment models and three-dimensional subject models, in the process of layered processing, for any three-dimensional subject model or three-dimensional attachment models, slicing can be performed with the layer height being separately configured, or two or more three-dimensional subject models and/or the three-dimensional attachment models can be sliced according to a unified layer height. Or in the process of performing layered processing on the three-dimensional object model, the overall height of the three-dimensional object model is divided, the three-dimensional subject model and the three-dimensional attachment model are sliced within a certain height range according to a unified layer height, and within another height range, the three-dimensional subject model and the three-dimensional attachment model are respectively configured with a layer height for slicing.

During layered processing, when the three-dimensional subject model and the three-dimensional attachment model are sliced according to the unified layer height or a separately configured layer height, the three-dimensional subject model and the three-dimensional attachment model can be sliced uniformly or separately with a fixed layer thickness by using a fixed layer thickness, the fixed layer thickness can be a default value or a layer thickness set by a technician. Of course, it is also possible to slice with different fixed layer thicknesses or non-fixed layer thicknesses in different height ranges according to the layer thickness values set artificially.

After the layered processing, all the cross-sectional layer thicknesses with marks of the three-dimensional object model are obtained, and the marked layer thickness information is attached to the property file or the file header of the three-dimensional object model. The file is parsed during printing to obtain the layer height distribution that can be realized according to the layered processing method, and the processing unit (in the control device of the 3D printing device) obtains the thickness of each cross-sectional layer by analyzing the file where the tooth model is located, and controls the Z-axis drive mechanism to adjust the spacing between the build platform and the preset printing reference surface according to the obtained layer thickness, and controls the energy of the exposure device to irradiate the corresponding layered image according to the layer thickness.

Please continue to refer to Fig. 1, in step S12, based on the attachment relationship, an over-curing property is set to part of slices of the three-dimensional attachment model or at least part of the attachment slices of the three-dimensional attachment model. In the embodiments provided in the present application, it should be considered that without special description, the three-dimensional subject model is normally cured in printing.

The attachment slice refers to a slice that produces a boundary or intersecting physical bonding structure in the integrated attachment relationship between the three-dimensional subject model and the three-dimensional attachment model, or a slice in which structurally mutually supportable or surface-contacting parts in an activity attachment relationship are located, or the slices where the structure or the part that causes the attachment relationship are located, or the slice of the three-dimensional attachment model. The surface includes an inner contour surface and an external contour surface.

According to the technical problem or improvement measure to be solved for different printed workpieces, the over-curing property is set in the three-dimensional attachment model or at least part of the attachment slices. In an embodiment of the present application, for example, in a biological organ model composed of skeletons and muscles, an over-curing property is set for the attachment slice of the visible part of the biological organ subject model or muscle model as the three-dimensional subject model which is penetrated by the skeleton model as a three-dimensional attachment model, namely, only the physical bonding part or physical contact part on the external contour of the three-dimensional subject model and the three-dimensional attachment model is set with an over-curing property.

In an embodiment of the present application, such as in the layered processing of an object model including information codes, the three-dimensional attachment model is an information code carrying model, the three-dimensional subject model is an object subject model, and the over-curing property should be at least arranged on the upper surface of the information code carrying model which serves as a three-dimensional attachment model.

In an embodiment of the present application, for a heart that includes blood vessels inside, in order to display the blood vessel structure in the heart muscle, a material that is displayed with a certain transparency after curing is used for printing, and a color with a distinction degree is displayed by decreasing transparency after over-curing. To achieve the display of the blood vessel structure, the over-curing property needs to be set for all the slices of the blood vessel structure model.

In an embodiment of the present application, as in the layered processing of the tooth subject model and the gum line identification model, the three-dimensional attachment model, i.e., the gum line identification model sets the over-curing property at least in the slice where the external contour of the gum line identification model is located in the integrated three-dimensional object model.

In step S12, the setting of the over-curing property of the three-dimensional attachment model may be performed by the layered processing module. The layered processing module may implement the over-curing settings in different ways.

In an embodiment of the present application, the over-curing property is described in terms of grayscale values of at least the contour regions in the layered image of each attachment slice.

The contour includes an inner contour and an external contour. The grayscale value is used to instruct the 3D printing device to output energy radiation to the materials to be cured corresponding to the at least contour region to over-cure the materials to be cured. After the slicing processing in step S 11, a cross-sectional pattern or layered image of each cross-sectional layer of the three-dimensional subject model and the three-dimensional attachment model can be obtained respectively, and the layered processing module can set a grayscale value for the pattern of each cross-sectional layer. Generally, the grayscale is a value indicating the brightness of the image, that is, the color depth of the points in a black and white image, generally ranging from 0 to 255, 255 for white and 0 for black, and the grayscale value refers to the brightness of a single pixel point. Through setting the grayscale of each pixel point in the cross-sectional pattern or layered image, the 3D printing device can control at least one of the radiation intensity, radiation duration, or irradiation times at the corresponding pixel point position of the pattern cured layer to be printed according to the radiation parameters of the energy radiation device corresponding to the grayscale value of the pixel point in subsequent printing. The grayscale value of each pixel point may determine whether the corresponding pixel point in the cured pattern is cured or over-cured.

In an embodiment of the present application, the three-dimensional subject model and the three-dimensional attachment model are respectively a tooth structure model and a gum line model. After the slicing processing is completed, the layered processing module sets a grayscale value for each layered image of the tooth structure model and the gum line model. In an implementation of the present embodiment, an average grayscale value can be used for the tooth structure model, that is, each pixel point of each slice of the tooth structure model uses the same grayscale value, and the same grayscale value corresponds to the normally cured grayscale value range. For each slice of the gum line structure, the grayscale of the pixel points of at least the external contour part in the three-dimensional object model is set to be in the range of the grayscale value corresponding to over-curing, which can be the same grayscale value that causes over-curing of the materials to be cured at the corresponding pixel points or can be respectively set to grayscale values of different pixel points. Usually the higher brightness of the pixel points corresponds to a decrease in radiation energy, and the grayscale values set for at least the external contour part of the gum line slices are less than the grayscale threshold corresponding to normal curing.

In an embodiment of the present application, the over-curing property are described in terms of contour mask images of contour regions in the layered images of each attachment slice or three-dimensional attachment model slice.

The layered processing module divides the layered image of the attachment slice into at least two cross-sectional regions corresponding to a contour mask image in a contour region and a subject mask image in an internal region of the layered image, respectively. The cross-sectional regions may be discontinuous regions, and the corresponding subject mask images or contour mask images in an internal region or contour region are two and more closed figures. For example, in the layered processing of a heart model, the three-dimensional attachment model is a blood vessel model, which may have multiple closed figures on a layered pattern of the three-dimensional attachment model, with the contour mask image describing its over-curing property, and the mask images corresponding to the internal region and the contour region are multiple discontinuous closed figures.

The layered processing module can distinguish the internal region from the contour region of the attachment slices according to the set rules or instructions, such as setting the region within a certain length of the contour line such as 0.5mm, 1mm, 2mm and the like as the contour region; for example, the layered figures of a certain attachment slice as a whole are taken as the contour mask images, such as when an object model containing the information code is printed, the whole layered figure of the slice on the upper surface of the information code carrying model can be used as a contour mask image.

Wherein the grayscale value of the contour mask image is used to instruct the 3D printing device to output energy radiation to the materials to be cured corresponding to the at least contour region to over-cure the materials to be cured; and wherein the grayscale value of the subject mask image is used to instruct the 3D printing device to output energy radiation to the materials to be cured corresponding to the internal region to over-cure the materials to be cured, and the contour mask image means the over-curing property.

In an embodiment of the present application, the over-curing property is achieved through an over-curing label configured by an attachment slice.

The over-curing label is an over-curing instruction attached to each sliced data, so that certain rules can be set when over-curing, such as partial over-curing and overall over-curing of the slice is performed on the slice, to instruct the 3D printing device to output the energy to achieve over-curing of the materials to be cured according to the rules set by the over-curing label and based on the rules set by the over-curing instruction when the slice is printed. The over-curing label may also be stored in a separate configuration file, and the configuration file also includes configuration information such as layer height, figures and the like of each slice.

In an implementation of the present embodiment, the over-curing label can be set to be yes or no instruction to perform over-curing on the slice, for the slice with the over-curing instruction being yes, the 3D printing device outputs energy radiation which makes the slice over-cured when the slice is printed, to form the entire over-cured layered pattern; for the slice with the over-curing instruction being no, the 3D printing device outputs energy radiation which makes the slice normally cured when the slice is printed. For example, when the object model containing the information code is layered, at least the slice where the upper surface of the information code carrying model is located is set to perform over-curing, and it is possible to print to form the object body and the information code carrier that has an identifiable image gradient with the object body.

In one implementation of the present application, for example, a heart model containing blood vessels is subjected to layered processing, so that the heart muscle model is a three-dimensional subject model and the blood vessel model is a three-dimensional attachment model. When the heart model is subjected to layered processing, in the first step, the heart muscle model and the blood vessel model with an attachment relationship are acquired, and the implementation is as follows: firstly acquiring the three-dimensional subject model, i.e., the heart muscle model, and setting a marked part on the heart muscle model; and then setting a blood vessel model at the marked part of the heart muscle, i.e., the heart muscle model and the blood vessel model with an attachment relationship are obtained. In the second step, the heart muscle model and the blood vessel model with an attachment relationship are sliced, and the configuration information of each slice such as layer height and layered pattern is saved; during slicing, the heart muscle model and the blood vessel model can be sliced according to a unified layer height, or the heart muscle model and the blood vessel model can be sliced with separately configured layer heights, or the heart muscle model and the blood vessel model can be sliced with a unified layer height within a certain height range. Within a certain height range, the heart muscle model and blood vessel model are respectively configured with layer heights for slicing. In the third step, the over-curing property is set for the slices where the structures generating the attachment relationship are located, i.e., the attachment slices, the grayscale value of at least the contour region in the layered image of the attachment slice can be set to a value that enables the corresponding region to be over-cured in 3D printing, or the contour region in the layered image of the attachment slice can be set as a contour mask image, in order to make it over-cured during printing, or an over-curing label can be configured for each attachment slice, so that the 3D printing device runs according to the instruction of the over-curing label to realize over-curing of each slice.

In summary, in the present application, through designing a layered processing method that can be performed on a three-dimensional object model, the appearance changes that occur in the over-curing of light-curing materials are applied to three-dimensional object printing, thereby increasing identifying features to achieve or enhance the functions or realize improvement of product production, which is beneficial for realizing the value of printed products, and optimizing the production process.

The present application further provides a layered processing system that can be configured to perform layered processing on the three-dimensional subject model and three-dimensional attachment model in the layered processing method provided in the present application. The layered processing system may be an operating system in a layered device, and the layered device may be multiple general purpose or specialized computing systems, such as: personal computers, server computers, handheld or portable devices, tablet type devices, multiprocessor systems, microprocessor-based systems, set top boxes, programmable consumer electronic devices, network PCs, minicomputers, mainframe computers, etc.

The layered processing system includes an acquisition module and a layered processing module; the acquisition module is configured to acquire a three-dimensional subject model and a three-dimensional attachment model with an attachment relationship; the layered processing module is configured to perform layered processing on the three-dimensional subject model and the three-dimensional attachment model, to respectively obtain each subject slice of the three-dimensional subject model and each attachment slice of the three-dimensional attachment model, and the layered processing module is configured to set an over-curing property in each attachment slice of at least the attached part of the three-dimensional subject model in the three-dimensional attachment model.

Please refer to Fig. 3 which shows a flow chart showing that the layered processing system of the present application performs layered processing on the three-dimensional subject model. In step S30, the layered processing system acquires a three-dimensional subject model and a three-dimensional attachment model with an attachment relationship; in step S31, the three-dimensional subject model and the three-dimensional attachment model are subjected to layered processing, to respectively obtain each subject slice of the three-dimensional subject model and each attachment slice of the three-dimensional attachment model,; and in step S32, based on the attachment relationship, at least some of the attachment slices in the three-dimensional attachment model are set with an over-curing property.

In an embodiment of the present application, the acquisition module includes an acquisition unit, a reading unit and a model generating unit.

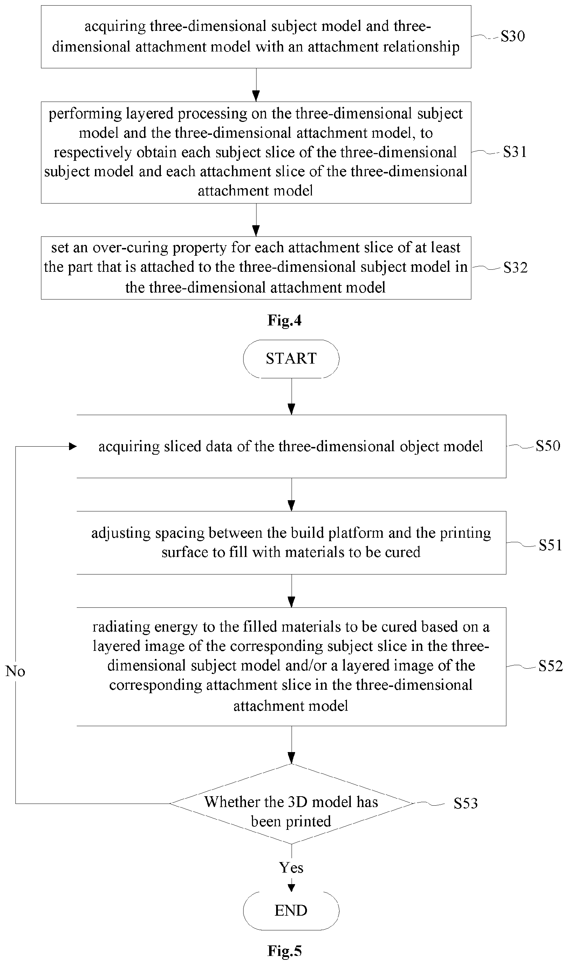

Please refer to Fig. 4 which shows steps through which the acquisition module performs layered processing to acquire a three-dimensional subject model and a three-dimensional attachment model with an attachment relationship.

In step S40, the acquisition unit acquires a three-dimensional subject model having the marked parts set on the contour. The three-dimensional subject model may be from a device or equipment with a storage function, in one implementation of the present application, the three-dimensional subject model is stored in the storage device of the computer device and is extracted and called by the acquisition module.

In step S41, based on the acquired three-dimensional subject model, the reading unit identifies the marked parts of the three-dimensional subject model.

In step S42, the model generating unit sets a three-dimensional attachment model saved in the storage device at the marked part, to obtain a three-dimensional subject model and a three-dimensional attachment model with an attachment relationship.

For example, in an embodiment of layered processing of a heart model, the acquiring module acquires a heart muscle model having a mark set on the inner contour, and sets a blood vessel model at the inner contour, to obtain a muscle model and a blood vessel model with an attachment relationship. For example, in the embodiment of performing layered processing on the object model containing the information code, the acquisition module acquires an object subject model having the marked part on the base surface, and sets the information code carrying model at the base model, to obtain the information code carrying model and the object subject model with an attachment relationship. For example, in the embodiment of performing layered processing on the tooth subject model and the gum line structure, the acquisition module acquires the tooth model having the marked part at the intersection of the tooth body structure and the gum structure, and sets the gum line structure at the marked part to obtain the tooth subject structure and the gum line structure with an attachment relationship.

The layered processing module is configured to execute layering instructions to slice the three-dimensional subject model and the three-dimensional attachment model according to the layered processing method provided in the present application, and to realize the layered effect according to its layered steps. The layering instructions are generated by the program of the layered processing method.

During layered processing, the step S31 of slicing the three-dimensional subject model and the three-dimensional attachment model includes performing layered processing on the three-dimensional subject model and the three-dimensional attachment model according to a unified layer height; or performing layered processing on the three-dimensional subject model and the three-dimensional attachment model separately according to separately configured layer heights; or slicing the three-dimensional subject model and the three-dimensional attachment model according to both of the above two manners. The layer height is the slicing thickness, which corresponds to the layer thickness of the cured layer in the subsequent printing. In the layered processing, the three-dimensional object model is divided into cross-sectional layers with a certain thickness for accumulation.

In an embodiment, the layered processing module performs layered processing on the three-dimensional subject model and the three-dimensional attachment model according to the unified layer height, that is, the three-dimensional subject model and the three-dimensional attachment model are integrated as a three-dimensional object model in the process of setting the layer height, that is, the three-dimensional subject model and the three-dimensional attachment model are sliced, the three-dimensional object model is subjected to preset layer height assignment without distinguishing the three-dimensional subject model and the three-dimensional attachment model with an attachment relationship.

Alternatively in another embodiment, the layered processing module performs layered processing on the three-dimensional subject model and the three-dimensional attachment model according to the separately configured layer heights, and the three-dimensional subject model and the three-dimensional attachment model are respectively sliced as relatively independent models and are separately marked with layer heights.

Alternatively in still another embodiment, the three-dimensional object model includes three or more three-dimensional attachment models and three-dimensional subject models, and in the process of layered processing, any three-dimensional subject model or three-dimensional attachment model can be separately configured with a layer height for slicing, or two or more three-dimensional subject models and/or three-dimensional attachment models are sliced according to a unified layer height. Or in the process of performing layered processing on the three-dimensional object model, the entire height of the three-dimensional object model is divided, the three-dimensional subject model and the three-dimensional attachment model are sliced according to a unified layer height in a certain height range, and in another height range, the three-dimensional subject model and the three-dimensional attachment model are respectively configured with a layer height for slicing.

During layered processing, when the three-dimensional subject model and the three-dimensional attachment model are sliced according to a unified layer height or when the three-dimensional subject model and the three-dimensional attachment model are separately configured with a layer height for slicing, the three-dimensional subject model and the three-dimensional attachment model can be sliced uniformly or can be separately sliced with a fixed layer thickness, and the fixed layer thickness can be a default value or a layer thickness set by a technician. Of course, it is also possible to slice with different fixed layer thicknesses or non-fixed layer thicknesses in different height ranges according to artificially set layer thickness values.

After the layered processing, all the cross-sectional layer thicknesses of the three-dimensional object model with marks are obtained, and the marked layer thickness information is attached to the property file or the file header of the three-dimensional object model. The file is parsed during printing to obtain the layer height distribution that can be realized according to the layered processing method, and the processing unit (in the control device of the 3D printing device) obtains the thickness of each cross-sectional layer by analyzing the file where the tooth model is located, and controls the Z-axis drive mechanism to adjust the spacing between the build platform and the preset printing reference surface according to the obtained layer thickness, and controls the energy of the exposure device to irradiate the corresponding layered image according to the layer thickness.

Please continue to refer to Fig. 3, in step S32, based on the attachment relationship, part of the slices of the three-dimensional attachment model or at least part of the attachment slices in the three-dimensional attachment model are set with an over-curing property. In the embodiment provided in the present application, it should be considered that without special description, the three-dimensional subject model is normally cured during printing.

The attachment slice refers to a slice that produces a boundary or intersecting physical bonding structure in the integrated attachment relationship between the three-dimensional subject model and the three-dimensional attachment model, or a slice in which structurally mutually supportable or surface-contacting parts in an activity attachment relationship are located, or the slices where the structure or the part that causes the attachment relationship are located, or the slice of the three-dimensional attachment model. The surface includes an inner contour surface and an external contour surface.

According to the technical problem or improvement measure to be solved for different printed workpieces, the over-curing property is set in the three-dimensional attachment model or at least part of the attachment slices. In an embodiment of the present application, for example, in a biological organ model composed of skeletons and muscles, an over-curing property is set for the attachment slice of the visible part of the biological organ subject model or muscle model as the three-dimensional subject model which is penetrated by the skeleton model as a three-dimensional attachment model, namely, only the physical bonding part or physical contact part on the external contour of the three-dimensional subject model and the three-dimensional attachment model is set with an over-curing property.

In an embodiment of the present application, as in the layered processing of an object model containing an information code, the three-dimensional attachment model is the information code carrying model, and the three-dimensional subject model is the object subject model, and the over-curing property is set at least on the upper surface of the information code carrying model serving as the three-dimensional attachment model.

In an embodiment of the present application, for a heart that includes blood vessels inside, in order to display the blood vessel structure in the heart muscle, a material that is displayed with a certain transparency after curing is used for printing, and a color with a distinction degree is displayed by decreasing transparency after over-curing. To achieve the display of the blood vessel structure, the over-curing property needs to be set for all the slices of the blood vessel structure model.

In an embodiment of the present application, as in the layered processing of a tooth structure and a gum line, the three-dimensional attachment model, i.e., the gum line model sets the over-curing property at least in the slice where the external contour of the gum line structure is located in the integrated three-dimensional object model.

In step S32, the setting of over-curing property of the three-dimensional attachment model may be performed by the layered processing module. The layered processing module may achieve over-curing in different manners.

In an embodiment of the present application, the over-curing property is described in terms of grayscale values of at least contour regions in the layered image of each attachment slice. The contour includes an inner contour and an external contour. The grayscale value is used to instruct the 3D printing device to output energy radiation to the materials to be cured corresponding to the at least contour region to over-cure the materials to be cured. After the slicing processing in step S 11, a cross-sectional pattern or layered image of each cross-sectional layer of the three-dimensional subject model and the three-dimensional attachment model can be obtained, respectively, and the layered processing module can set a grayscale value for the pattern of each cross-sectional layer. Generally, the grayscale is a value indicating the brightness of the image, that is, the color depth of the points in a black and white image, generally ranging from 0 to 255, 255 for white and 0 for black, and the grayscale value refers to the brightness of a single pixel point. Through setting the grayscale of each pixel point in the cross-sectional pattern or layered image, the 3D printing device can control at least one of the radiation intensity, radiation duration, or irradiation times at the corresponding pixel point position of the pattern cured layer to be printed according to the radiation parameters of the energy radiation device corresponding to the grayscale value of the pixel point in subsequent printing. The grayscale value of each pixel point may determine whether the corresponding pixel point in the cured pattern is cured or over-cured.

In an embodiment of the present application, the three-dimensional subject model and three-dimensional attachment model are a tooth structure model and a gum line identification model, respectively, and after completing the slicing, the layered processing module sets a grayscale value for each layered image of the tooth structure model and the gum line identification model. In an implementation of the present embodiment, an average grayscale value may be adopted for the tooth structure model, i.e., the same grayscale value is used for each pixel point of each slice of the tooth structure model, and the same grayscale value falls within the grayscale range corresponding to the normal curing. For each slice of the gum line structure, the grayscale of the pixel points of at least the external contour part of the three-dimensional object model is set to be in the range of grayscale value corresponding to over-curing, which can be the same grayscale value that causes over-curing of the materials to be cured at the corresponding pixel points or can be set to different pixel point grayscale values respectively. Usually the higher brightness of the pixel points corresponds to a decrease in radiation energy, and the grayscale values set for at least the external contour part of the slice of the gum line identification model are less than the grayscale threshold corresponding to normal curing.

In an embodiment of the present application, the over-curing property is described in terms of contour mask images of the contour regions in the layered image of each attachment slice or the slices of the three-dimensional attachment model. The layered processing module divides the layered image of the attachment slice into at least two cross-sectional regions corresponding to a contour mask image in a contour region and a subject mask image in an internal region of the layered image, respectively. The cross-sectional regions may be discontinuous regions, and the corresponding subject mask images or contour mask images in an internal region or contour region are two and more closed figures. For example, in the layered processing of a heart model, the three-dimensional attachment model is a blood vessel model, which may have multiple closed figures on a layered pattern of the three-dimensional attachment model, with the contour mask image describing its over-curing property, and the mask images corresponding to both the internal region and the contour region are multiple discontinuous closed figures.

The layered processing module can distinguish the internal region from the contour region of the attachment slice according to the set rules or instructions, for example, the region within a certain length of the contour line such as 0.5mm, 1mm, 2mm and the like is set as the contour region, for another example, the layered figures of a certain attachment slice as a whole are taken as the contour mask images, such as when the object model containing the information code is printed, the whole layered figure of the slice on the upper surface of the information code carrying model can be used as a contour mask image.

Wherein, the grayscale value of the contour mask image is used to instruct the 3D printing device to output energy radiation to the materials to be cured corresponding to the at least contour region to over-cure the materials to be cured; and the grayscale value of the main mask image is used to instruct the 3D printing device to output energy radiation to the materials to be cured corresponding to the internal region to cure the materials to be cured, and the contour mask image represents the over-curing property.

In an embodiment of the present application, the over-curing property is implemented with an over-curing label that is configured based on the attachment slice. the materials to be cured of the printing surface to obtain corresponding pattern cured layer. The over-curing label is an over-curing instruction attached to each sliced data, and certain rules can be set when over-curing, such as partial over-curing and overall over-curing of the slice is performed on the slice, to instruct the 3D printing device to output the energy to achieve over-curing of the materials to be cured according to the rules set by the over-curing label and based on the rules set by the over-curing instruction when the slice is printed. The over-curing label may also be stored in a separate configuration file, and the configuration file also includes configuration information such as layer height, figures and the like of each slice.

In an implementation of the present embodiment, the over-curing label can be set to be yes or no instruction to perform over-curing on the slice, for the slice with the over-curing instruction being yes, the 3D printing device outputs energy radiation which makes the slice over-curing when the slice is printed, to form the entire over-cured layered pattern; for the slice with the over-curing instruction being no, the 3D printing device outputs energy radiation which makes the slice normally cured when the slice is printed. For example, when the object model containing the information code is layered, at least the slice where the upper surface of the information code carrier model is located is set to perform over-curing, and it is possible to print to form the object body and the information code carrier that has an identifiable image gradient with the object body.

In order to realize the application of the layered processing method and the layered processing system provided in the present application in printing, the present application further provides a computer device including a storage device and a processing device that can be used as a layered device to perform layered processing on a 3D object model and to provide the 3D printing device with sliced data that can perform printing.

The storage device includes a non-volatile memory and a system bus. Wherein the non-volatile memory is, for example, a solid state drive or a USB flash drive, etc. The system bus is configured to connect the non-volatile memory with a CPU, wherein the CPU may be integrated in the storage device or packaged separately from the storage device and connected with the non-volatile memory via the system bus.

The storage device is configured to store at least one program and a three-dimensional object model, and the three-dimensional object model includes a three-dimensional subject model and a three-dimensional attachment model. The at least one program is a program for layered processing on the three-dimensional object model as provided in the present application. Wherein the three-dimensional object model is, for example, a three-dimensional object model designed using CAD. The computer device divides the three-dimensional object model along the Z-axis direction (i.e., along the height direction) in a cross-sectional manner. Wherein, a cross-sectional figure outlined by the contours of the three-dimensional object model is formed on the cross-sectional layer formed by each adjacent cross-sectional division, when the cross-sectional layer is sufficiently thin, the contour lines of the upper cross-sectional surface and the lower cross-sectional surface of the cross-sectional layer are considered to be identical.

In an embodiment of the present application, the three-dimensional object model stored by the storage device is a heart model, the heart model may be a three-dimensional object model designed and output by three-dimensional modeling software, or may be a model determined based on three-dimensional images acquired by scanning human heart organs or capturing MRI images, etc., including a muscle model as a three-dimensional subject model and a blood vessel model as the 3D attachment model.

In an embodiment of the present application, the three-dimenional object model stored by the storage device is an information code base model as a three-dimensional subject model and an information code model as a three-dimensional attachment model, which may be derived from a 3D model designed by three-dimensional modeling software.

In an embodiment of the present application, the three-dimenional object model stored by the storage device is a tooth model consisting of a tooth subject model and a gum line model with an attachment relationship, the tooth subject model may be derived from a 3D model obtained by a doctor's scanning of the patient's oral cavity or a 3D model designed by 3D modeling software, and the gum line model may be derived from a 3D model designed by 3D modeling software .

In an embodiment of the present application, the storage device includes an input unit, an output unit, a model generating unit, and a storage unit. The input unit may receive image data or scanning data, may be connected to or receive image data from an imaging system or a scanning system such as a camera, an X-ray system, a CT system, an MRI system, and/or an ultrasound imaging system, and transmit the data to a model generating unit to generate a virtual model based on entity generation. In an implementation of the present embodiment, the input unit may include a mouse, a keyboard, a touch screen or a touch pad or any suitable input device. In an implementation of the present embodiment, the input unit may include a wired or wireless network interface card (NIC) to receive data from, for example, an imaging system. Further, the input unit may communicate with a system or server that stores images such as a picture archiving communication system (PACS) and may obtain any relevant image information, data or parameters from such system, server or application. The input unit may be software, hardware, firmware, and any combination thereof.

The model generating unit may include components or modules to generate a digital model such as a 3D or 4D model of a biological organ structure such as an organ vascular system or a heart model or any other significant region in the body and an illustration thereof. The digital model may generate a heart model through a model generating unit according to the information received from an imaging system, for example, the medical images of the heart received from a CT system via an input unit.

The output unit may include components such as a display connected to a display screen to realize visible output and may communicate with other components or units in the system of the computer device. The output unit may be software, hardware, firmware, and any combination thereof.

The storage unit may save a model generated by the model unit or a model generated directly by the three-dimensional modeling software, and may store a program or other executable codes executable by a processing device. In an embodiment of the present application, the storage unit is configured to save a three-dimensional object model and executable codes for performing layered processing on the three-dimensional object model.

The processing device is connected with the storage device, and is configured to execute at least one program, to coordinate the storage device to perform any layered processing method provided in the present application on the three-dimensional object model.

The present application further provides a computer readable storage medium for storing at least one program, and the at least one program executes any of the layered processing methods provided in the present application when being invoked.

The computer readable storage medium may include, but is not limited to, a floppy disk, an optical disk, a CD-ROM (compact disk-read-only memory), a magnetic disk, an ROM (read only memory), an RAM (random access memory), an EPROM (erasable programmable read-only memory), an EEPROM (electrically erasable programmable read-only memory), a magnetic or optical card, a flash memory, or other types of media/computer readable media suitable for storing machine-executable instructions.

The present application also provides a 3D printing method applied to a 3D printing device. The 3D printing device includes an energy radiation device as well as a build platform.

The energy radiation device is configured to radiate energy to the printing surface, and can be an energy radiation device based on face projection, or an energy radiation device based on scanning radiation. In common 3D printing devices such as DLP (Digital Light Procession, DLP for short) devices based on bottom exposure, the energy radiation device is a projection device based on surface projection, including a DMD chip, a controller and a storage module. Wherein the storage module stores a layered image for layering the 3D object model. The DMD chip irradiates a light source corresponding to each pixel on the corresponding layered image to the bottom surface of the container after receiving a control signal from the controller. Wherein the DMD chip looks like a small piece of mirror and is encapsulated in a closed space made of metal and glass. In fact, the mirror is composed of hundreds of thousands or even millions of micro-mirrors, each micro-mirror represents a pixel, and the projected image is composed of these pixels. The DMD chip can be simply described as a semiconductor optical switch and a micro-mirror corresponding to the pixel points, and the controller allows/prohibits each micro-chip to reflect light by controlling each optical switch in the DMD chip, whereby the corresponding layered image is irradiated onto the light-curing material through the transparent bottom of the container, such that the light-curing material corresponding to the image shape is cured to obtain a pattern cured layer.

Also or commonly an SLA (Stereo lithography Apparatus, stereo light curing molding) device is included, for bottom exposure or top exposure SLA device, the energy radiation device is an energy radiation device based on scanning radiation, including a laser emitter, a lens group located on the light emitting path of the laser emitter and a galvanometer group located on the light emitting side of the lens group, wherein the laser emitter controllably adjusts the energy of the output laser beam, for example, the laser emitter controllably emits a laser beam of a preset power and stops emitting the laser beam, and for another example, the laser emitter controllably increases the power of the laser beam and decreases the power of the laser beam. The lens group is used to adjust the focusing position of the laser beam, the galvanometer group is used to controllably scan the laser beam in a two-dimensional space on the bottom or top surface of the container, the light-curing material scanned by the light beam is cured into the corresponding pattern cured layer.

The build platform is suspended in the upper part of the printing reference surface (also called the printing surface) for attaching and accumulating a pattern cured layer cured by irradiation. Typically, the material of the build platform is different from the light-curing material. The build platform moves in the Z-axis (vertical) direction of the 3D printing device, to allow the materials to be cured to be filled between the build platform and the printing reference surface, such that the energy radiation system in the 3D printing device irradiates the materials to be cured by energy radiation, and the irradiated material is cured and cumulatively attached to the build platform. In order to precisely control the irradiation energy of each cured layer, the build platform and the attached manufactured three-dimensional object portion need to be moved to a position where the minimum spacing from the printing reference surface is the layer thickness of the cured layer to be cured, and when the build platform rises, the cured layer is separated from the printing surface.

Please refer to Fig. 5 which shows implementing steps of a 3D printing method provided in the present application.

A three-dimensional object to be printed with the 3D printing method of the present application can be a tooth, including a tooth body and a gum line arranged on the tooth body; the three-dimensional object can also be a three-dimensional object containing an information code, including a three-dimensional object and an information code carrying structure; the three-dimensional object can also be a biological organ, which includes a biological organ body such as a muscle structure, and at least one of a blood vessel structure, a nervous structure, or a skeleton structure.

In step S50, sliced data of the three-dimensional object model is acquired, the three-dimensional object model includes a three-dimensional subject model and a three-dimensional attachment model with an attachment relationship, wherein at least part of the attachment slices of the three-dimensional attachment model are set with an over-curing property.

The three-dimensional subject model and the three-dimensional attachment model may be at least two relatively independent detachable models, or may also be models with integrated display of at least two structures with an intersecting or interpenetrating relationship, that is, the attachment relationship may be mutual independence, mutual penetration or containment. In actual manufacturing, the entirety composed of the three-dimensional subject model and the three-dimensional attachment model has information beyond that characterized by the three-dimensional subject model or the three-dimensional attachment model separately, or the model functions or features are enhanced by the attachment relationship. The attachment relationship allows the three-dimensional subject model and the three-dimensional attachment model to have a certain physical bonding point or physical supporting relationship.

The attachment relationship between the three-dimensional subject model and the three-dimensional attachment model may be an activity attachment relationship, such as blood vessels and heart muscle. The three-dimensional subject model and the three-dimensional attachment model are relatively independent detachable structures, no intersection is generated between the individual models, but the individual models can be assembled or supported mutually in structure, for example, the blood vessel structure can be placed in the heart muscle model; the attachment relationship can also be an integrated attachment relationship, such as the tooth structure and the gun line, and the information code and the information code base, an interface surface or an intersecting part exists between the three-dimensional subject model and the three-dimensional attachment model, and the three-dimensional subject model and the three-dimensional attachment model are fixed into an entirety through the interface or the intersecting module.

The three-dimensional subject model and the three-dimensional attachment model further include two independent object models with an attachment relationship, and may also be multiple independent object models with an attachment relationship. The matching setting of the three-dimensional subject model and the three-dimensional attachment model is not limited to the above examples. In different embodiments of the present application, the three-dimensional subject model and the three-dimensional attachment model both represent independent object models with an attachment relationship.

The attachment slice refers to a slice that produces a boundary or intersecting physical bonding structure in the integrated attachment relationship between the three-dimensional subject model and the three-dimensional attachment model, or a slice in which structurally mutually supportable or surface-contacting parts in an activity attachment relationship are located, or the slices where the structure or the part that causes the attachment relationship are located, or the slice of the three-dimensional attachment model. The surface includes an inner contour surface and an external contour surface.

The three-dimensional object at least contains attachment objects for making external devices identify the assembly position of the manufactured subject object or for making external devices identify the configuration information of the manufactured subject object. The assembly position is the specific position where the manufactured three-dimensional object is put into production and use in order to achieve its function, such as the printed three-dimensional object consisting of a tooth structure and a gum line, i.e., a tooth film, which is used in practice as a pressed mold for a tooth film sleeve, and for the formed mold, the part below the gum line should be cut off. The gum line in the tooth film printed by the printing method provided in the present application is the attachment object that serves as an external device to identify the assembly position of the subject object. By setting the over-curing property to at least part of the attachment slices, the manufactured tooth film contains a gum line structure with a distinction degree of color that can be used to achieve or enhance the position of the gum line on the image for the external device to identify, i.e., the assembly position of the subject object may be identified.

The configuration information may be structural information of the product itself, product manufacturing information such as the manufacturer, an ID of the product, position information of the transfer conveyance place adjacent to the next process or processes in the product production process or other usage assistance information that needs to be added to the product to convey, and maintenance information, etc. For example, if the printing method is used for printing a heart model containing heart muscles and blood vessels, the blood vessels are attachment objects, and by setting an over-curing property to at least part of the attachment slices therein, the manufactured heart model can show the blood vessel structure for identifying the internal structural information of the subject body, i.e., the heart muscles. For another example, the 3D printing method provided in the present application is used to print an object model containing an information code, wherein by setting an over-curing property to at least part of the slices of the identification model carrying the information code in the three-dimensional object model, the manufactured three-dimensional object model is provided with an identifiable information code image, and the information code image can be configured to obtain configuration information of the object model body after being identified.

The sliced data of the acquired three-dimensional object model includes at least sliced layer height, sliced image and over-curing properties.

In step S51, based on the acquired layer height of the slice of the three-dimensional object model, the spacing between the build platform and the printing surface is adjusted, so that the materials to be cured in the container flows and fills the gap in the spacing, or a filling device adds the light-curing material to the gap to fill the printing surface with the materials to be cured, and the spacing forms the layer thickness of the layer to be printed, which is set corresponding to the layer thickness of the slice in the sliced data. The printing surface is the contact surface where the corresponding energy radiation system conforms to the projection direction such that the radiated energy is in contact with the resin, for example, in a DLP device where the bottom surface is exposed, the printing surface is the inner bottom surface of the container accommodating the light-curing material.

In a specific embodiment, the step of adjusting the spacing between the build platform and the printing surface based on the sliced data is to adjust the distance between the build platform and the printing surface based on the unified layer height when the layer heights of each slice in the three-dimensional subject model and the three-dimensional attachment model are the same. That is, the three-dimensional object model is considered as an entirety in the layer height assignment, and the three-dimensional subject model is not distinguished from the three-dimensional attachment model. According to the unified layer height, the build platform is adjusted to form a preset gap equal to the unified layer height between the build platform and the printing surface. When the layer height of each slice in the three-dimensional subject model and three-dimensional attachment model is not consistent, the sliced data includes layered image irradiation data set based on the layer height of each slice in the three-dimensional subject model and three-dimensional attachment model, and the distance between the build platform and the printing surface is adjusted based on the layer height of each slice and the irradiation sequence of layered image. In an implementation of the present embodiment, the irradiation sequence of layered image is as follows: defining slicing of the three-dimensional object model in the direction vertical to the Z-axis (i.e., height direction), using the height of the lowest point of the three-dimensional object model on the Z-axis as the horizontal plane, with each slice height defined as the vertical distance from the upper surface of the slice to the horizontal plane, and sorting the slice of the three-dimensional attachment model and the slice of the three-dimensional subject model according to the slice height; following the layered image irradiation sequence, taking the slice to be cured as the current slice, and according to the height of the previous slice and the height of the current slice, adjusting the preset gap between the build platform and the printing surface, wherein the difference between the height of the current slice and the height of the previous slice is the adjustment height.

In step S52, the energy radiation system radiates energy to the filled materials to be cured based on the layered image of the corresponding subject slice in the three-dimensional subject model, and/or the layered image of the corresponding attachment slice in the three-dimensional attachment model, i.e., the sliced image, and also based on the layer thickness and over-curing property of the slice, to obtain the corresponding pattern cured layer. In the 3D printing device based on surface exposure, the energy radiation device is a projection device. Based on the initial correspondence relationship between the initial light radiation intensity of the projection device and the controlled parameters and the correspondence relationship between the detected light radiation intensity after attenuation and the controlled parameters, the compensated controlled parameters are determined and the projection device is controlled according to the determined controlled parameters. Wherein the controlled parameters refer to parameters capable of changing the light radiation and/or irradiation duration output by the projection device, which include but are not limited to: supply current, supply voltage, supply duration, duty cycle of the control signal for adjusting the grayscale or electric field current, etc., based on determining the relationship between the layered image and the controlled parameters, the sliced data are converted into controlled parameters and cured to obtain the corresponding pattern cured figures.

Based on the acquired over-curing property of the slices of the three-dimensional object model, the energy radiation device performs over-cured radiation on the materials to be cured corresponding to at least part of the attachment slices that are set with an over-curing property. The over-curing means that the materials to be cured is radiated with an energy exceeding a certain threshold such that the color appearance is changed after the subject form is transformed into a solid state and no longer changes.

Specifically, the step of controlling the energy radiation device for over-curing includes: controlling at least one of the radiation duration, light intensity, and irradiation times of the energy radiation device, and presetting the correspondence relationship between the layer thickness and the energy or grayscale of the irradiated image according to the type of energy device. For example, the energy radiation device contains a laser emitter, the output power of the laser emitter is controlled according to the correspondence relationship between layer thickness and energy. For another example, the energy radiation device contains a light source array and a DMD chip, then the grayscale of each light source of radiated image in the light source array is controlled according to the correspondence relationship between the layer thickness and grayscale. During specific implementation, the correspondence relationship between the layer thickness and the irradiation duration, or the correspondence relationship between the layer thickness and the energy and irradiation duration, and the correspondence relationship between the layer thickness and grayscale and irradiation duration can be preset, and the image irradiated by the energy radiation device is controlled according to the layer thickness of the current layer. Herein, the correspondence relationship includes but is not limited to: a comparison table-type correspondence, or a pre-built adjustment function, etc.

In a specific embodiment, the step of subjecting at least part of the layered image of the corresponding attachment slice to over-cured radiation according to the over-curing property includes:
based on the grayscale value of at least the contour region in the layered image of the attachment slice, the energy radiation device is controlled to irradiate energy, to over-cure the material to be over-cured of at least the contour region corresponding to the printing surface to obtain corresponding pattern cured layer. Generally, the grayscale is a value indicating the brightness of the image, that is, the color depth of the points in a black and white image, generally ranging from 0 to 255, 255 for white and 0 for black, and the grayscale value refers to the brightness of a single pixel point. The grayscale value is included in the sliced data, and has a certain correspondence relationship with the radiation parameter, to instruct the 3D printing device to output energy radiation to the materials to be cured corresponding to the at least contour region to over-cure the materials to be cured, and the grayscale values of different pixel points determine whether the corresponding pixel point in the cured pattern is in a cured or over-cured state. In an implementation of the present application, such as in the printing of the tooth structure and the gum line, at least the external contour part of the slice where the gum line is located is set to a grayscale value that makes the corresponding position of the cured layer over-cured, and the manufactured tooth film can be displayed as an over-cured pattern color in the gum line.

Alternatively, the energy radiation device is controlled for energy radiation based on the contour mask image of the corresponding contour region in the layered image of the attachment slice, to over-cure the materials to be cured of the printing surface corresponding to the contour region to obtain the corresponding contour structure of the pattern cured layer. In an implementation of the present embodiment, during layered processing, the three-dimensional object model divides the layered image of at least part of the attachment slices into at least two cross-sectional regions, which respectively correspond to a contour mask image in a contour region and a subject mask image in an internal region of the layered image, respectively. The cross-sectional regions may be discontinuous regions, and the corresponding subject mask images or contour mask images in an internal region or contour region are two and more closed figures. For example, in the layered processing of a heart model, the three-dimensional attachment model is a blood vessel model, which may have multiple closed figures on a layered pattern of the three-dimensional attachment model, with the contour mask image describing its over-curing property, the corresponding mask images in both the internal region and the contour region are multiple discontinuous closed figures. The internal region of the attachment slice is distinguished from the contour region according to the set rules or instructions, for example, the region within a certain length of the contour line such as 0.5mm, 1mm, 2mm and the like is set as the contour region, for another example, the layered figures of a certain attachment slice as a whole are taken as the contour mask images, such as when the object model containing the information code is printed, the whole layered figure of the slice on the upper surface of the information code carrying model can be used as a contour mask image. The grayscale value of the contour mask image is configured to instruct the 3D printing device to output energy radiation to the materials to be cured corresponding to the at least contour region to over-cure the materials to be cured, and the contour mask image just refers to the over-curing property.

Alternatively, based on the over-curing label of the attachment slices, the energy radiation device is controlled for energy radiation, to over-cure the materials to be cured on the printing surface to obtain the corresponding pattern cured layer. The over-curing label is an over-curing instruction attached to each sliced data, and certain rules can be set when over-curing, such as partial over-curing and overall over-curing of the slice is performed on the slice, and the radiation parameters of the energy radiation system have certain correspondence relationship, to instruct the 3D printing device to output the energy to achieve over-curing of the materials to be cured according to the rules set by the over-curing label and based on the rules set by the over-curing instruction when the slice is printed. The over-curing label may also be stored in a separate configuration file, and the configuration file also includes configuration information such as layer height, figures and the like of each slice.

In step S53, whether the printing of the three-dimensional object model has been completed is judged, if not, then continuing to perform S50, S51 and S52, if so, then finishing. Through performing the above steps, the three-dimensional objects corresponding to the three-dimensional object model are accumulated and formed on the build platform.

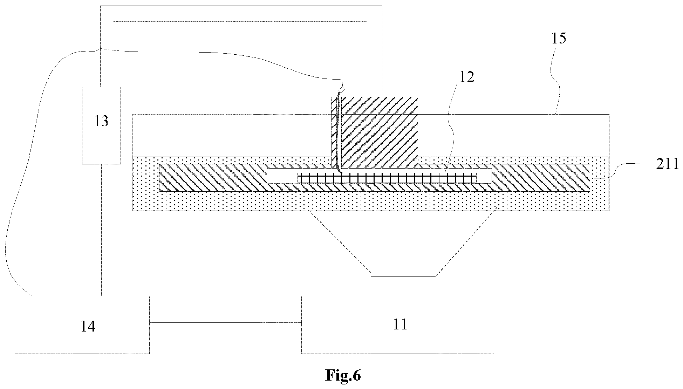

Please refer to Fig. 6, the present application further provides a 3D printing device, including an energy radiation device 11, a build platform 12, a Z-axis drive mechanism 13, a control device 14, and a container 15.

The energy radiation device 11 is an energy radiation device 11 based on surface exposure or an energy radiation device 11 based on scanning radiation. In common 3D printing devices such as DLP (Digital Light Procession, DLP for short) devices based on bottom exposure, the energy radiation device 11 is a projection device based on surface projection, including a DMD chip, a controller and a storage module, etc. Wherein the storage module stores a layered image which performs layered processing on the 3D object model. The DMD chip irradiates a light source of each pixel on the corresponding layered image to the bottom surface of the container 15 after receiving a control signal of the controller. Wherein the DMD chip looks like a small piece of mirror and is encapsulated in a closed space made of metal and glass. In fact, the mirror is composed of hundreds of thousands or even millions of micro-mirrors, each micro-mirror represents a pixel, and the projected image is composed of these pixels. The DMD chip can be simply described as a semiconductor optical switch and a micro-mirror corresponding to the pixel points, and the controller allows/prohibits each micro-chip to reflect light by controlling each optical switch in the DMD chip, whereby the corresponding layered image is irradiated onto the light-curing material through the transparent bottom of the container 15, such that the light-curing material corresponding to the image shape is cured to obtain a pattern cured layer.

Also or commonly an SLA (Stereo lithography Apparatus, stereo light curing molding) device is included, for bottom exposure or top exposure SLA device, the energy radiation device 11 is an energy radiation device 11 based on scanning radiation, including a laser emitter, a lens group located on the light emitting path of the laser emitter and a lens group located on the light emitting side of the lens group, and a motor controlling the galvanometer, wherein the laser emitter controllably adjusts the energy of the output laser beam, for example, the laser emitter controllably emits a laser beam of a preset power and stops emitting the laser beam, and for another example, the laser emitter controllably increases the power of the laser beam and decreases the power of the laser beam. The lens group is used to adjust the focusing position of the laser beam, the galvanometer group is used to controllably scan the laser beam in a two-dimensional space on the bottom or top surface of the container 15, the light-curing material scanned by the light beam is cured into the corresponding pattern cured layer, and the oscillation of the galvanometer of the galvanometer group determines the scanning size of the SLA device.

Also or commonly, for example, as to the LCD (Liquid Crystal Display, liquid crystal surface light source curing) device based on surface exposure, the energy radiation system is the LCD liquid crystal screen light source system. For the LCD device based on bottom exposure, the LCD includes an LCD liquid crystal screen located below the container 15, and a light source set directly below the LCD liquid crystal screen. The control chip in the energy radiation device 11 projects the layered image of the slices to be printed onto the printing surface through the LCD liquid crystal screen, and uses the pattern radiation surface provided by the LCD liquid crystal screen to cure the materials to be cured in the container 15 into the corresponding pattern cured layer.

Commonly, in the bottom exposure device (such as a DLP or an LCD device), the build platform 12 is suspended on the upper part of the printing reference surface, in the top exposure device (such as a DLP or an SLA device), the build platform 12 is suspended on the lower part of the printing reference surface (generally the liquid surface of the resin slot), to adhere and accumulate the pattern cured layer cured through irradiation. Generally, the material of the build platform 12 is different from the light-curing material. The build platform 12 is driven by the Z-axis drive mechanism 13 in the 3D printing device and moves along the Z-axis (vertical) direction in order to facilitate the filling of the materials to be cured between the build platform 12 and the printing reference surface, so that the energy radiation system in the 3D printing device can irradiate the materials to be cured by energy irradiation, then the irradiated materials are cured and cumulatively adhered to the build platform 12. In order to precisely control the irradiation energy of each cured layer, the build platform 12 and the attached manufactured three-dimensional object portion need to be moved to a position where the minimum spacing from the printing reference surface is the layer thickness of the cured layer to be cured, and the Z-axis drive mechanism 13 drives the build platform 12 to rise, such that the cured layer is separated from the bottom of the container 15.

With a bottom-exposed device (e.g., a DLP or an LCD device) as an example, when the Z-axis drive mechanism 13 drives the build platform 12 to lower, the build platform 12 or the pattern cured layer attached to the build platform 12 is lowered to a spacing away from the bottom of the container 15 by the layer height of a cured layer, to irradiate the light-curing material filled within the spacing. When the Z-axis drive mechanism 13 drives the build platform 12 to rise, the pattern cured layer is generally separated from the bottom of the container 15.

In some embodiments, the energy radiation device 11 is arranged on the bottom surface of the container 15 and radiates energy to the bottom surface of the container 15 to form a pattern cured layer on the bottom surface of the container 15; in a 3D printing device based on bottom exposure, the container 15 may be transparent overall or transparent only on the bottom of the container 15, for example, the container 15 is a glass container 15, and light-absorbing paper (e.g., black film, or black paper, etc.) is affixed to the walls of container 15, to reduce interference with curing of the light-curing material due to light scattering during projection. A transparent flexible film (not shown in the figure) for easy peeling is paved on the bottom surface of the container 15.

Alternatively, in some other implementations, the energy radiation device 11 is arranged on the top of the container 15, and radiates energy to the surface of the materials to be cured in the container 15, to form a pattern cured layer on the surface of the materials to be cured.

The energy radiation device 11 is configured to radiate energy to the printing surface filled with the materials to be cured based on the sliced data of the acquired three-dimensional object model, to form the corresponding pattern cured layer. Wherein the three-dimensional object model includes a three-dimensional subject model and a three-dimensional attachment model with an attachment relationship. At least part of the attachment slices in the three-dimensional model are set with an over-curing property, and during the radiation period, the energy radiation device 11 performs over-cured radiation on at least part of the layered images of the corresponding attachment slices according to the set over-curing property.

In the curing process of 3D printing, the light-curing material within a preset layer thickness is cured based on the projected figure or scanning path through the radiation energy of the energy radiation device 11. The object form of the light-curing material changes from liquid to solid during the curing process, and the energy density or the energy sum received in the radiation region of a determined layer thickness determines the object form after the curing is completed, and the object form can be controlled by controlling the radiation duration, light intensity, or the irradiation times in printing. In the normal curing state, the completion of the single-layer curing is characterized by complete curing of the sliced figure.

In the present application, based on the change characteristics such as color other than the change in object form of the light-curing material during the process of receiving the radiation energy, the structure that needs to be distinguished in appearance is set with an over-curing property. The over-curing property means that the light-curing material continues to receive a certain amount of radiation after it is completely cured, and the over-cured material still remains solid in the object form but exhibits an over-cured patterned color, usually the color changes, so that there is a color gradient in appearance with the structure set to be normally cured.

For example, in an embodiment, the three-dimensional object model may be a heart model with a blood vessel structure, wherein the heart muscle part can be regarded as a three-dimensional subject model, and the blood vessel structure or blood vessel veins can be regarded as a three-dimensional attachment model, the attachment relationship is now the containment relationship, and the three-dimensional object model has an internal distinguishing structure. The sliced figure or scanning path obtained by performing layered processing on the three-dimensional object model is the external contour of the heart model. Through the existing technical means, the muscle structure and the blood vessel structure of the heart model need to be separated and printed separately and then assembled to obtain the heart model structure with a distinction degree, however, in addition to low efficiency and cumbersome process due to the need for assembly, the method also has the risk of damaging the printed object, especially for the printed entity that is a small blood vessel. In an implementation of the present embodiment, the heart model is printed with a material that shows transparency after curing, and the three-dimensional attachment model, that is, the blood vessel structure, is set with an over-curing property. The muscle part of the heart body is normally cured to form a visible heart model of a blood vessel structure.

For example, in another implementation, the three-dimensional object model may be set to a model with a distinguishing structure in appearance such as a sudden change in structure or color on the external contour or inner contour. For example, the three-dimensional object model is an object model containing an information code such as a two-dimensional code, wherein the object subject model is a three-dimensional subject model and the identification model carrying the information code is a three-dimensional attachment model. The identification model carrying the information code may be a structure such as a 3D two-dimensional code formed by stretching with the information code figure as a cross section, for example, the information represented as "0" in the 3D two-dimensional code is a recessed part of a color gradient, the information represented as "1" is a raised part of another color gradient, and for another example, the information represented as "0" in the 3D two-dimensional code is normally cured, and the information represented as "1" is an over-cured part. In actual use, the function of information codes such as two-dimensional codes is realized by scanning to acquire an identifiable two-dimensional code pattern. In the application of the present application, the over-curing property can be set on the whole or at least the upper surface of the three-dimensional attachment model, i.e., the identification model carrying the two-dimensional code, and the three-dimensional object model formed by the three-dimensional attachment model and the three-dimensional subject model can provide or enhance the gradient of image identification to realize preset functions.

For example, in a further embodiment, the three-dimensional subject model and three-dimensional attachment model are a tooth subject model and a gum line identification model, respectively. The tooth model is usually applied in the production of a tooth film by pressing a film on the tooth model and cutting off the part below the gum to form a usable film sleeve. In an implementation of the present embodiment, the over-curing property is set for the three-dimensional attachment model, i.e., the whole gum line identification model or the visible part of the gum line identification model in the overall model, i.e., the external contour, and the gum line structure after printing is completed has the over-cured distinguishing color in the integrated model composed of the gum line and the tooth body, to facilitate the cutting out of the part below the gum line after subsequent film pressing of the overall tooth model, identification can be performed through the raised structure of the gum line, and automatic or manual cutting can be realized based on the color gradient that identifies the appearance of the model.

In some embodiments of the present application, the three-dimensional subject model may also be a biological organ subject model such as a muscle structure, and the three-dimensional attachment model is at least one of a blood vessel model, a nervous model or a skeleton model, etc., but it is not limited hereto, and any object that is subjected to 3D printing through the over-curing idea of the present application falls within the implementable scope of the present application.

The three-dimensional subject model and three-dimensional attachment model may be at least two relatively independent detachable models, or may also be models with integrated display of at least two structures with an intersecting or interpenetrating relationship, that is, the attachment relationship may be mutual independence, mutual penetration or containment. In actual manufacturing, the entirety composed of the three-dimensional subject model and the three-dimensional attachment model has information beyond that characterized by the three-dimensional subject model or the three-dimensional attachment model separately, or the model functions or features are enhanced by the attachment relationship. The attachment relationship allows the three-dimensional subject model and the three-dimensional attachment model to have a certain physical bonding point or physical supporting relationship.

The attachment relationship between the three-dimensional subject model and the three-dimensional attachment model may be an activity attachment relationship, such as blood vessels and heart muscle. The three-dimensional subject model and the three-dimensional attachment model are relatively independent detachable structures, no intersection is generated between the individual models, but the individual models can be assembled or supported mutually in structure, for example, the blood vessel structure can be placed in a heart muscle model; the attachment relationship can also be an integrated attachment relationship, such as the tooth structure and the gun line, and the information code and the information code base, an interface surface or an intersecting part exists between the three-dimensional subject model and the three-dimensional attachment model, and the three-dimensional subject model and the three-dimensional attachment model are fixed into an entirety through the interface or the intersecting module.

At least part of the slices in the three-dimensional attachment model are set with an over-curing property, and the materials to be cured in the corresponding regions of the slices set with an over-curing property is radiated to an over-cured state during curing, i.e., the corresponding regions in the physical form are formed into a cured structure and continue to receive radiation energy until the color appearance is changed. The over-curing property sets the radiation amount that continues to be received after curing to determine the color of the pattern rendered by the at least part of the attachment slices.

The attachment slice refers to a slice that produces a boundary or intersecting physical bonding structure in the integrated attachment relationship between the three-dimensional subject model and the three-dimensional attachment model, or a slice in which structurally mutually supportable or surface-contacting parts in an activity attachment relationship are located, or the slices where the structure or the part that causes the attachment relationship are located, or the slice of the three-dimensional attachment model. The surface includes an inner contour surface and an external contour surface.

According to the technical problem or improvement measure to be solved for different printed workpieces, the over-curing property is set in the three-dimensional attachment model or at least part of the attachment slices. In an embodiment of the present application, for example, in a biological organ model composed of skeletons and muscles, an over-curing property is set for the attachment slice of the visible part of the biological organ subject model or muscle model as the three-dimensional subject model which is penetrated by the skeleton model as a three-dimensional attachment model, namely, only the physical bonding part or physical contact part on the external contour of the three-dimensional subject model and the three-dimensional attachment model is set with an over-curing property.

In an embodiment of the present application, as in the layered processing of an object model containing an information code, the three-dimensional attachment model is the information code carrying model, and the three-dimensional subject model is the object subject model, and the over-curing property is set at least on the upper surface of the information code carrying model serving as the three-dimensional attachment model.

In an embodiment of the present application, for a heart that includes blood vessels inside, in order to display the blood vessel structure in the heart muscle, a material that is displayed with a certain transparency after curing is used for printing, and a color with a distinction degree is displayed by decreasing transparency after over-curing. To achieve the display of the blood vessel structure, the over-curing property needs to be set for all the slices of the blood vessel structure model.

In an embodiment of the present application, as in the layered processing of the tooth subject model and the gum line identification model, the three-dimensional attachment model, i.e., the gum line identification model, sets the over-curing property at least in the slice where the external contour of the gum line identification model is located in the integrated three-dimensional object model.

The manner through which the energy radiation device 11 performs over-cured radiation on at least part of the layered image of the corresponding attachment slice according to the set over-curing property includes any of the following:
the energy radiation device 11 performs energy radiation based on the grayscale value of at least the contour region in the layered image of the attachment slice, to over-cure the materials to be cured corresponding to at least the contour region corresponding to the printing surface to obtain the corresponding pattern cured layer; the grayscale value is used to instruct the 3D printing device to output energy radiation to the materials to be cured corresponding to the at least contour region to over-cure the materials to be cured. For the cross-sectional pattern or layered image of each cross-sectional layer of the obtained three-dimensional subject model and the three-dimensional attachment model, a grayscale value can be set for the pattern of each cross-sectional layer in the layered processing. Generally, the grayscale is a value indicating the brightness of the image, that is, the color depth of the points in a black and white image, generally ranging from 0 to 255, 255 for white and 0 for black, and the grayscale value refers to the brightness of a single pixel point. The energy radiation device 11 corresponds to the radiation parameter according to the grayscale value of the pixel point, and setting the grayscale value of each pixel point can determine whether the corresponding pixel point in the cured pattern is in a cured or over-cured state, and presents a preset pattern color. During specific implementation, the control device 14 controls at least one of the energy, grayscale, and duration of the image irradiated by the exposure device according to the layer thickness. Wherein, the control device 14 presets the correspondence relationship between the layer thickness and the energy or grayscale of the illuminated image according to the type of the exposure device. For example, if the exposure device includes a laser transmitter, then the control device 14 controls the output power of the laser transmitter according to the correspondence relationship between the layer thickness and the energy. For another example, the exposure device includes a light source array and a DMD chip, and the control device 14 controls the grayscale of each light source in the light source array to illuminate the image according to the correspondence relationship between the layer thickness and the grayscale. The control device 14 may also be preset with the correspondence relationship between the layer thickness and the irradiation duration, or the correspondence relationship between the layer thickness and the energy and the irradiation duration, and the correspondence relationship between the layer thickness and the grayscale and the irradiation duration, and the control device 14 may also control the exposure device to irradiate the image according to the layer thickness of the current layer. Herein, the correspondence relationship includes, but is not limited to: a comparison table-type correspondence, or a pre-built adjustment function.

Or, the energy radiation device 11 performs energy radiation based on the contour mask image of of the corresponding contour region in the layered image of the attachment slice, to over-cure the materials to be cured of the corresponding contour region in the printing surface to obtain the corresponding contour structure of the pattern cured layer; the contour mask image just refers to the over-curing property, the grayscale value is used to instruct the 3D printing device to output energy radiation to the materials to be cured corresponding to the at least contour region to over-cure the materials to be cured; and the grayscale value of the subject mask image is used to instruct the 3D printing device to output energy radiation to the materials to be cured corresponding to the internal region to over-cure the materials to be cured. The contour mask image can be set based on the layered processing rules, for example, the region within a certain length of the contour line such as 0.5mm, 1mm, 2mm and the like is set as the contour region; and for example, the layered figures of an attachment slice as a whole are taken as the contour mask images.

Alternatively, based on the over-curing label of the attachment slices, the energy radiation device 11 is controlled for energy radiation, to over-cure the materials to be cured of the printing surface to obtain corresponding pattern cured layer. The over-curing label is an over-curing instruction attached to each sliced data, and certain rules can be set when over-curing, such as partial over-curing and overall over-curing of the slice is performed on the slice, to instruct the 3D printing device to output the energy to achieve over-curing of the materials to be cured according to the rules set by the over-curing label and based on the rules set by the over-curing instruction when the slice is printed.

The energy radiation device 11 carries out energy radiation in the following manners: performing energy radiation on the corresponding radiation position according to at least one of radiation duration, light intensity, and irradiation times set based on the over-curing operation.

The build platform 12 is set corresponding to the energy radiation direction of the energy radiation device 11, to carry the formed pattern cured layer; the build platform 12 is driven by the Z-axis drive mechanism 13 in the 3D printing device and moves along the Z-axis direction in order to facilitate the filling of the materials to be cured between the build platform 12 and the printing surface, so that the energy radiation system in the 3D printing device can irradiate the materials to be cured by energy irradiation, then the irradiated materials are cured and cumulatively adhered to the build platform 12. In order to precisely control the irradiation energy of each cured layer, the build platform 12 and the attached manufactured three-dimensional object portion need to be moved to a position where the minimum spacing from the printing reference surface is the layer thickness of the cured layer to be cured.

The Z-axis drive mechanism 13 is connected to the build platform 12 for adjusting the spacing between the build platform 12 and the printing surface, to fill the printing surface with the materials to be cured; wherein the layer height of the filled materials to be cured corresponds to the layer height of the subject slice in the three-dimensional subject model, and/or the layer height of the attachment slice in the three-dimensional attachment model.

The Z-axis drive mechanism 13 generally includes a drive unit and a vertical movement unit, the drive unit is configured to drive the vertical movement unit, so that the vertical movement unit drives the build platform 12 to lift and move. For example, the drive unit is a drive motor. The drive unit is controlled by control instructions. Wherein, the control instructions include: directional instructions for indicating the build platform 12 to rise, fall or stop, and may even contain parameters such as rotating speed/rotating speed acceleration, or torque/twisting force, which facilitates precise control of the rising distance of the vertical movement unit for precise adjustment of the Z-axis. Herein, the vertical movement unit includes, for example, a fixed rod fixed to the build platform 12 at one end, and an occluded movement assembly fixed to the other end of the fixed rod, wherein the occluded movement assembly is driven by a drive unit to drive the fixed rod to move vertically, the occluded movement assembly is, for example, a limit movement assembly occluded by a tooth-shaped structure, such as a rack, etc. For another example, the vertical movement unit includes: a screw rod and a positioning movement structure screwed to the screw rod, wherein both ends of the screw rod are screwed to the drive unit, and the extended end of the positioning movement structure is fixedly connected to the build platform 12, and the positioning movement structure may be a ball screw. It should be understood that the Z-axis is usually in the vertical direction, i.e., the direction vertical to the horizontal direction.

The manner through which the Z-axis drive mechanism 13 adjusts the spacing between the build platform 12 and the printing surface includes any of the following:
When the layer height of the slices in the three-dimensional subject model and the layer height of the slices the three-dimensional attachment model are consistent, the control device 14 controls the Z-axis drive mechanism 13 to adjust the spacing between the build platform 12 and the printing surface based on the unified layer height; i.e., the three-dimensional object model is treated as an entirety in the pre-processing layered processing, and the three-dimensional subject model and the three-dimensional attachment model are not distinguished. According to the unified layer height, the build platform 12 is adjusted to form a preset gap equal to the height of a unified layer height between the build platform 12 and the printing surface. Based on the acquired sliced data, the Z-axis drive mechanism 13 drives the build platform 12 to move to a position where the gap between the build platform 12 and the printing surface is corresponding to the layer height of the slice.

When the layer height of the slices in the three-dimensional subject model and the layer height of the slices the three-dimensional attachment model are not consistent, the control device 14 controls the Z-axis driving mechanism 13 to adjust the spacing between the build platform 12 and the printing surface based on the layered image irradiation sequence set for the layer height of each slice in the three-dimensional subject model and three-dimensional attachment model. In an implementation of the present embodiment, the irradiation sequence of layered image is as follows: defining slicing of the three-dimensional object model in the direction vertical to the Z-axis (i.e., height direction), using the height of the lowest point of the three-dimensional object model on the Z-axis as the horizontal plane, with each slice height defined as the vertical distance from the upper surface of the slice to the horizontal plane, and sorting the slice of the three-dimensional attachment model and the slice of the three-dimensional subject model according to the slice height; following the layered image irradiation sequence, taking the slice to be cured as the current slice, and according to the height of the previous slice and the height of the current slice, adjusting the preset gap between the build platform 12 and the printing surface, wherein the difference between the height of the current slice and the height of the previous slice is the adjustment height. The printing surface is the contact surface where the corresponding energy radiation system conforms to the projection direction such that the radiated energy is in contact with the resin, for example, in a DLP device where the bottom surface is exposed, the printing surface is the inner bottom surface of the container 15 accommodating the light-curing material.

While the Z-axis drive mechanism 13 adjusts the spacing between the build platform 12 and the printing surface, the materials to be cured in the container 15 flows to fill the gap in the spacing, or the light-curing material is added to the gap by the filler device to fill the printing surface with the materials to be cured, the spacing is the layer thickness of the layer to be printed, which is set corresponding to the slice thickness in the sliced data.

The container 15 is configured to accommodate materials to be cured, the light-curing material includes any liquid material that can be easily light-cured, and its liquid material includes, for example, a light-curing resin liquid, or a resin liquid doped with a mixture of powder, color additives, and other materials, etc. The doped powder material includes, but is not limited to: ceramic powder, color additive powder, etc. The cross section of the container 15 is set according to the requirements of the volume of materials to be cured to be accommodated in the printing device and the area of the exposure surface. The side wall of the container 15 and the bottom of the container 15 have a certain strength, can be made of metal materials such as aluminum alloy, stainless steel, etc., and can also be prepared from such non-metallic materials as carbon fiber, silicone materials, glass, plastic, etc.

The control device 14 is configured to control the Z-axis drive mechanism 13 to move along the vertical axis and to control at least one of the irradiation time, power, or frequency of the energy radiation system. The control device 14 may include: a storage unit, a processing unit, and an interface unit, etc.

The storage unit includes a high-speed random access memory and may also include a non-volatile memory, such as one or more disk storage devices, flash memory devices, or other non-volatile solid state storage devices. In some embodiments, the storage unit may also include a memory far away from one or more processors, such as a network-attached memory accessible via RF circuits or external ports and communication networks (not shown), wherein the communication networks may be the Internet, one or more intranets, local area networks (LANs), wireless local area networks (WLANs), storage area networks (SANs), etc., or suitable combinations thereof. The memory controller may control access to the memory by other components of the device such as the CPU and peripheral interfaces.

The processing unit includes one or more general purpose microprocessors, one or more application specific integrated circuits (ASICs), one or more field programmable logic arrays (FPGAs), or any combination thereof. The processing unit is operably coupled to a memory and/or a non-volatile storage device. More specifically, the processor may execute instructions stored in the memory and/or the non-volatile storage device to perform operations in the computing device, such as generating image data and/or transferring image data to an electronic display.

The interface unit includes a plurality of interfaces, and each interface is respectively connected with the energy radiation system, the build platform 12 and the Z-axis drive mechanism 13. Each interface is configured on the control device 14 according to the actual data transmission protocol, and the processing unit is operably coupled to each interface, so that the control device 14 can interact with the energy radiation system, the build platform 12 and the Z-axis drive mechanism 13.

During printing, the control device 14 controls the Z-axis drive mechanism 13 and the energy radiation system to perform curing layer by layer. The energy radiation device 11 controls the energy radiation to the filled materials to be cured based on the layered image corresponding to the subject slice in the three-dimensional subject model and/or the layered image corresponding to the attachment slice in the three-dimensional attachment model, to obtain the corresponding pattern cured layer. Specifically, the control device 14 sends the layered images to the energy radiation system one by one according to the preset printing sequence, and the energy radiation system irradiates the images to the printing surface, and the irradiated energy cures the materials to be cured of the printing layer into a corresponding pattern cured layer. The control device 14 is further configured to send control instructions to the Z-axis drive mechanism 13 between irradiation intervals, for example, the control device 14 sends control instructions for lowering direction and rotating speed to the Z-axis drive mechanism 13 after controlling the energy radiation device 11 to finish irradiation, the Z-axis drive mechanism 13 rises to a preset height from the image display surface of the energy radiation device 11 based on the control instructions, and then the control device 14 sends to the Z-axis drive mechanism 13 control instructions including the lowering direction and the rotating speed, such that the Z-axis drive mechanism 13 drives the build platform 12 to move to the printing surface. Throughout the rising and lowering process, the control device 14 determines the spacing between the build platform 12 and the printing surface by monitoring the movement of the Z-axis drive mechanism 13, and outputs a control instruction containing a stopping instruction when the build platform 12 reaches the corresponding spacing. The control device 14 judges whether the 3D object model has completed irradiation of all the layered images, if so, then printing is finished, otherwise, the above printing process is repeated until the printing is complete.

By means of the 3D printing device provided by the present application and the printing method for the acquired three-dimensional object model, the corresponding three-dimensional object can be obtained after printing is completed. The manufactured three-dimensional object at least contains an attachment object for enabling an external device to identify the assembly position of the manufactured subject object or an attachment object for enabling an external device to identify the configuration information of the manufactured subject object.

The assembly position is the specific position where the manufactured three-dimensional object is put into production and use in order to achieve its function, such as the printed three-dimensional object consisting of a tooth structure and a gum line, i.e., a tooth film, which is used in practice as a pressed mold for a tooth film sleeve, and for the formed mold, the part below the gum line should be cut off. The gum line in the tooth film printed by the printing method provided in the present application is the attachment object that serves as an external device to identify the assembly position of the subject object. By setting the over-curing property to at least part of the attachment slices, the manufactured tooth film contains a gum line structure with a distinction degree of color that can be used to achieve or enhance the position of the gum line on the image for the external device to identify, i.e., the assembly position of the subject object may be identified.

The configuration information may be structural information of the product itself, product manufacturing information such as the manufacturer, an ID of the product, position information of the transfer conveyance place adjacent to the next process or processes in the product production process or other usage assistance information that needs to be added to the product to convey, and maintenance information, etc. For example, if the printing method is used for printing a heart model containing heart muscles and blood vessels, the blood vessels are attachment objects, and by setting an over-curing property to at least part of the attachment slices therein, the manufactured heart model can show the blood vessel structure for identifying the internal structural information of the subject body, i.e., the heart muscles. For another example, the 3D printing method provided in the present application is used to print an object model containing an information code, wherein by setting an over-curing property to at least part of the slices of the identification model carrying the information code in the three-dimensional object model, the manufactured three-dimensional object model is provided with an identifiable information code image, and the information code image can be configured to obtain configuration information of the object model body after being identified.

In one embodiment, the manufactured three-dimensional object may be a heart with a blood vessel structure, and the heart may exhibit a visible internal or surface blood vessel structure after the printing is completed through the 3D printing device provided in the present application and the corresponding 3D printing method.

In another embodiment, the manufactured three-dimensional object may be an object containing an information code. After printing is completed through the 3D printing device provided in the present application and the corresponding 3D printing method, in the object containing the information code, the object subject part and the information code part have a certain color gradient, the information code for example can be a 3D two-dimensional code, wherein the information indicated as "0" is a recessed part of one color gradient, and the information indicated as "1" is the raised part of another color gradient, or for example, the information indicated as "0" in the 3D two-dimensional code is the normal curing and the information indicated as "1" is the over-cured part. In actual use, the function of an information code such as a two-dimensional code is realized by scanning to acquire an identifiable two-dimensional code pattern. The 3D printing device provided by the present application has an image-identifiable gradient for the information code formed by the three-dimensional attachment model and the three-dimensional subject model provided with an over-curing property and the object body, so as to realize the function of setting the information code.

In still another implementation, the manufactured three-dimensional object may be a tooth containing gum line identifications. Based on the 3D printing device and 3D printing method provided in the present application, the over-curing property is set for the three-dimensional attachment model, i.e., the gum line identification model as a whole or in the visible part of the gum line identification model in the overall model, i.e., the external contour for printing, the gum line structure after printing is completed has the over-cured distinguishing color in an integrated structure composed of the gum line and the tooth body, the part below the gum line is cut after the manufactured tooth structure is subjected to film pressing, identification can be performed through the raised structure of the gum line, and automatic or manual cutting can be realized based on the color gradient that identifies the appearance of the model.

In some embodiments of the present application, the three-dimensional object manufactured using the 3D printing device may also be a biological organ such as an organ with a muscle as the subject body and containing at least one of blood vessels, nerves, or skeletons, etc., which is not limited hereto, any object that is subjected to 3D printing through the over-curing idea of the present application falls within the implementable scope of the present application.

Based on each of the above examples, the present application provides each of the following embodiments:
1. A layered processing method of a three-dimensional object model, including:
   acquiring a three-dimensional subject model and a three-dimensional attachment model with an attachment relationship;
   performing layered processing on the three-dimensional subject model and the three-dimensional attachment model, to respectively obtain each subject slice of the three-dimensional subject model and each attachment slice of the three-dimensional attachment model; and
   based on the attachment relationship, setting an over-curing property for at least part of the attachment slices in the three-dimensional attachment model.
2. The layered processing method of a three-dimensional object model of embodiment 1, wherein the step of acquiring the three-dimensional subject model and the three-dimensional attachment model with an attachment relationship includes:
   acquiring a three-dimensional subject model, wherein the contour of the three-dimensional subject model is set with marked parts; and
   setting a three-dimensional attachment model at the marked part of the three-dimensional subject model, to obtain a three-dimensional subject model and a three-dimensional attachment model with an attachment relationship.
3. The layered processing method of a three-dimensional object model of embodiment 2, wherein the marked part includes at least one of the following:
   a structural model for identifying assembly information of the three-dimensional subject model; and
   a structural model for identifying configuration information of the three-dimensional subject model.
4. The layered processing method of a three-dimensional object model of embodiment 1, wherein the step of performing layered processing on the three-dimensional subject model and the three-dimensional attachment model includes at least one of the following:
   performing layered processing on the three-dimensional subject model and the three-dimensional attachment model according to a unified layer height; and
   performing layered processing on the three-dimensional subject model and the three-dimensional attachment model respectively according to the separately configured layer height.
5. The layered processing method of a three-dimensional object model of embodiment 1, wherein the over-curing property includes any of the following:
   the over-curing property is described in terms of grayscale values of at least contour regions in the layered image of each attachment slice;
   the over-curing property is described in terms of contour mask images of the contour regions in the layered image of each attachment slice; and
   the over-curing property is an over-curing label configiured for each attachment slice.
6. The layered processing method of a three-dimensional object model of embodiment 1, wherein the attachment relationship includes any of the following: an activity attachment relationship, and an integrated attachment relationship.
7. The layered processing method of a three-dimensional object model of embodiment 1 or 6, wherein the three-dimensional subject model and the three-dimensional attachment model include two independent object models with an attachment relationshi p.
8. The layered processing method of a three-dimensional object model of embodiment 1, wherein the three-dimensional object model includes a tooth model, the three-dimensional subject model is a tooth subject model, and the three-dimensional attachment model is a gum line identification model;
   the three-dimensional object model includes an object model containing an information code, wherein the three-dimensional subject model is the object subject model, and the three-dimensional attachment model is the identification model carrying the information code; or
   the three-dimensional object model includes a biological organ model, wherein the three-dimensional subject model is a biological organ subject model, and the three-dimensional attachment model is at least one of a blood vessel model, a nervous model, or a skeleton model.
9. A 3D printing method, applied to a 3D printing device, wherein the 3D printing device comprises: an energy radiation device for radiating energy to a printing surface, and a build platform for carrying a three-dimensional object cured by energy radiation, wherein the 3D printing method comprises:
   acquiring sliced data of the three-dimensional object model; wherein the three-dimensional object model comprises a three-dimensional subject model and a three-dimensional attachment model with an attachment relationship; wherein at least part of attachment slices in the three-dimensional attachment model are set with an over-curing property;
   adjusting spacing between the build platform and the printing surface to fill with materials to be cured; wherein layer height of filled materials to be cured corresponds to the layer height of the corresponding subject slice in the three-dimensional subject model, and/or the layer height of the corresponding attachment slice in the three-dimensional attachment model;
   radiating energy to the filled materials to be cured based on a layered image of the corresponding subject slice in the three-dimensional subject model and/or a layered image of the corresponding attachment slice in the three-dimensional attachment model, to obtain a corresponding pattern cured layer; and
   repeating each of the above steps to accumulate pattern cured layers on the build platform to form the three-dimensional object corresponding to the three-dimensional object model;
   wherein, during the radiation, performing over-cured radiation on at least part of the layered image of the corresponding attachment slice according to the over-curing property.
10. The 3D printing method of embodiment 9, wherein the step of adjusting spacing between the build platform and the printing surface to fill the printing surface with materials to be cured comprises any of the following:
   adjusting the spacing between the build platform and the printing surface based on a unified layer height when the layer heights of the slices in the three-dimensional subject model and the slices in the three-dimensional attachment model are consistent; and
   when the layer heights of the slices in the three-dimensional subject model and the slices in the three-dimensional attachment model are not consistent, adjusting the spacing between the build platform and the printing surface based on the difference in layer heights of adjacent slices in the three-dimensional object model, so that the filled materials to be cured are configured to form the corresponding pattern cured layer.
11. The 3D printing method of embodiment 9, wherein the step of performing over-cured radiation on at least part of the layered image of the corresponding attachment slice according to the over-curing property includes any of the following:
   controlling the energy radiation device to perform energy radiation based on the grayscale value of at least the contour region in the layered image of the attachment slice, to over-cure the materials to be cured corresponding to at least the contour region in the printing surface, so as to obtain a corresponding pattern cured layer;
   controlling the energy radiation device to perform energy radiation based on the contour mask image of the corresponding contour region in the layered image of the attachment slice, to over-cure the materials to be cured corresponding to contour region in the printing surface, so as to obtain the corresponding contour structure of the pattern cured layer; and
   controlling the energy radiation device to perform energy radiation based on the over-curing label of the attachment slice, to over-cure the materials to be cured in the printing surface to obtain the corresponding pattern cured layer.
12. The 3D printing method of embodiment 11, wherein the step of controlling the energy radiation device to perform energy radiation includes: controlling at least one of the radiation duration, light intensity, and irradiation times of the energy radiation device.
13. The 3D printing method of embodiment 9, wherein the obtained three-dimensional object comprises at least one of the following attachment objects:
   an attachment object configured to enable an external device to identify the assembly position of the manufactured subject object; and
   an attachment object configured to enable an external device to identify the configuration information of the manufactured subject object.
14. The 3D printing method of embodiment 9, wherein the three-dimensional object comprises a tooth, an object containing an information code, or a biological organ.
15. A computer device, including:
   a storage device, configured to store at least one program and a three-dimensional object model, wherein the three-dimensional object model includes a three-dimensional subject model and a three-dimensional atatchment model with an attachment relationship; and
   a processing device, connected with the storage device and configured to execute at least one program, to coordinate the storage device to perform the layered processing method of any of embodiments 1-8.
16. A 3D printing device, comprising:
   an energy radiation device, configured to radiate energy to a printing surface based on the acquired sliced data of the three-dimensional object model; wherein the three-dimensional object model comprises a three-dimensional subject model and a three-dimensional attachment model with an attachment relationship; wherein at least part of attachment slices in the three-dimensional attachment model are set with an over-curing property;
   a build platform, configured to attach a pattern cured layer that has been cured after radiation by the energy radiation device, so as to form a corresponding three-dimensional object through accumulation of the pattern cured layer;
   a Z-axis drive mechanism, connected to the build platform, and configured to adjust spacing between the build platform and the printing surface to fill with materials to be cured; wherein the layer height of the filled materials to be cured corresponds to the layer height of the corresponding subject slice in the three-dimensional subject model, and/or the layer height of the corresponding attachment slice in the three-dimensional attachment model; and
   a control device, connected to the Z-axis drive mechanism and the energy device, and cofigured to control the Z-axis drive mechanism and the energy radiation device to print the three-dimensional object;
   wherein under the control of the control device, the energy radiation device controls to radiate energy to the filled materials to be cured based on a layered image of the corresponding subject slice in the three-dimensional subject model and/or a layered image of the corresponding attachment slice in the three-dimensional attachment model, to obtain a corresponding pattern cured layer; and
   wherein, during the radiation, the energy radiation device performs over-cured radiation on at least part of the layered image of the corresponding attachment slice according to the over-curing property.
17. The 3D printing device of embodiment 16, further comprising a container, configured to accommodate the materials to be cured;wherein the energy radiation device is arranged below the bottom surface of the container and radiates energy to the bottom surface of the container, to form the pattern cured layer on the bottom surface of the container; or, the energy radiation device is arranged above the container and radiates energy to the surface of the materials to be cured in the container, to form the pattern cured layer on the surface of the materials to be cured.
18. The 3D printing device of embodiment 16, wherein the energy radiation device is an energy radiation device based on surface projection, or an energy radiation device based on scanning radiation.
19. The 3D printing device of embodiment 16, wherein the manner through which the Z-axis drive mechanism adjusts the spacing between the build platform and the printing surface includes any of the following:
   the control device controls the Z-axis drive mechanism to adjust the spacing between the build platform and the printing surface based on the unified layer height when the layer heights of the slices in the three-dimensional subject model and the slices in the three-dimensional attachment model are consistent; and
   the control device controls the Z-axis drive mechanism to adjust the spacing between the build platform and the printing surface based on the the layered image irradiation sequence set by the layer height of each slice in the three-dimensional subject model and the three-dimensional attachment model when the layer heights of the slices in the three-dimensional subject model and the slices in the three-dimensional attachment model are not consistent.
20. The 3D printing device of embodiment 16, wherein the manner through which the energy radiation device performs over-cured radiation on at least part of the layered image of the corresponding attachment slice according to the over-curing property comprises any of the following:
   the energy radiation device performs energy radiation based on the grayscale value of at least the contour region in the layered image of the attachment slice, to over-cure the materials to be cured corresponding to at least the contour region in the printing surface, so as to obtain a corresponding pattern cured layer;
   the energy radiation device performs energy radiation based on the contour mask image of the corresponding contour region in the layered image of the attachment slice, to over-cure the materials to be cured corresponding to the contour region in the printing surface, so as to obtain the corresponding contour structure of the pattern cured layer; and
   the energy radiation device is controlled for energy radiation based on the over-curing label of the attachment slice, to over-cure the materials to be cured in the printing surface to obtain the corresponding pattern cured layer.
21. The 3D printing device of embodiment 20, wherein the manner through which the energy radiation device performs energy radaition comprises: performing energy radiation on corresponding radiation positions according to at least one of the radiation duration, light intensity, and irradiation times set based on over-curing operation.
22. The 3D printing device of embodiment 16, wherein the manufactured three-dimensional object comprises at least one of the following attachment objects:
   an attachment object configured to enable an external device to identify the assembly position of the manufactured subject object; and
   an attachment object configured to enable an external device to identify the configuration information of the manufactured subject object.
23. The 3D printing device of embodiment 16, wherein the three-dimensional object comprises a tooth, an object containing an information code, or a biological organ.
24. A computer readable storage medium, wherein at least one program is stored, the at least one program performs, when being invoked, a layered processing method as described in any of embodiments 1-8.
25. A layered processing system, including:
   an acquisition module, configured to acquire a three-dimensional subject model and a three-dimensional attachment model with an attachment relationship; and
   a layered processing module, configured to perform layered processing on the three-dimensional subject model and the three-dimensional attachment model, to respectively obtain each subject slice of the three-dimensional subject model and each attachment slice of the three-dimensional attachment model, and to set an over-curing property for each attachment slice of at least the part that is attached to the three-dimensional subject model in the three-dimensional attachment model.
26. The layered processing system of embodiment 25, wherein the acquisition module is configured to acquire a three-dimensional subject model, wherein the contour of the three-dimensional subject model is set with marked parts, and a three-dimensional attachment model is set at the corresponding marked part of the three-dimensional subject model, to obtain the three-dimensioal subject model and the three-dimensional attachment model with an attachment relationship.
27. The layered processing system of embodiment 26, wherein the marked part includes at least one of the following:
   a structural model for identifying assembly information of the three-dimensional subject model; and
   a structural model for identifying configuration information of the three-dimensional subject model.
28. The layered processing system of embodiment 25, wherein the layered processing module is used for any of the following layered processing methods:
   performing layered processing on the three-dimensional subject model and the three-dimensional attachment model according to a unified layer height; and
   performing layered processing on the three-dimensional subject model and the three-dimensional attachment model respectively according to the separately configured layer height.
29. The layered processing system of embodiment 25, wherein the over-curing property includes any of the following:
   the over-curing property is described in terms of grayscale values of at least contour regions in the layered image of each attachment slice;
   the over-curing property is described in terms of contour mask images of the contour regions in the layered image of each attachment slice; and
   the over-curing property is an over-curing label configiured for each attachment slice.

The above embodiments are merely illustrative of the principles of the present application and effects thereof, and are not intended to limit the present application. Any person skilled in the art can modify or change the above embodiments without departing from the spirit and scope of the present application. Therefore, all equivalent modifications or changes made by those skilled in the art without departing from the spirit and technical ideas disclosed in the present application are still encompassed within the scope of the claims of the present application.

## Claims

1. A 3D printing method, applied to a 3D printing device, wherein the 3D printing device comprises: an energy radiation device for radiating energy to a printing surface, and a build platform for carrying a three-dimensional object cured by energy radiation, wherein the 3D printing method comprises:
acquiring sliced data of the three-dimensional object model; wherein the three-dimensional object model comprises a three-dimensional subject model and a three-dimensional attachment model with an attachment relationship; wherein at least part of attachment slices in the three-dimensional attachment model are set with an over-curing property;
adjusting spacing between the build platform and the printing surface to fill with materials to be cured; wherein layer height of filled materials to be cured corresponds to the layer height of the corresponding subject slice in the three-dimensional subject model, and/or the layer height of the corresponding attachment slice in the three-dimensional attachment model;
radiating energy to the filled materials to be cured based on a layered image of the corresponding subject slice in the three-dimensional subject model and/or a layered image of the corresponding attachment slice in the three-dimensional attachment model, to obtain a corresponding pattern cured layer; and
repeating each of the above steps to accumulate pattern cured layers on the build platform to form the three-dimensional object corresponding to the three-dimensional object model;
wherein, during the radiation, performing over-cured radiation on at least part of the layered image of the corresponding attachment slice according to the over-curing property.

2. The 3D printing method of claim 1, wherein the step of adjusting spacing between the build platform and the printing surface to fill the printing surface with materials to be cured comprises any of the following:
adjusting the spacing between the build platform and the printing surface based on a unified layer height when the layer heights of the slices in the three-dimensional subject model and the slices in the three-dimensional attachment model are consistent; and
when the layer heights of the slices in the three-dimensional subject model and the slices in the three-dimensional attachment model are not consistent, adjusting the spacing between the build platform and the printing surface based on the difference in layer heights of adjacent slices in the three-dimensional object model, so that the filled materials to be cured are configured to form the corresponding pattern cured layer.

3. The 3D printing method of claim 1, wherein the step of performing over-cured radiation on at least part of the layered image of the corresponding attachment slice according to the over-curing property includes any of the following:
controlling the energy radiation device to perform energy radiation based on the grayscale value of at least the contour region in the layered image of the attachment slice, to over-cure the materials to be cured corresponding to at least the contour region in the printing surface, so as to obtain a corresponding pattern cured layer;
controlling the energy radiation device to perform energy radiation based on the contour mask image of the corresponding contour region in the layered image of the attachment slice, to over-cure the materials to be cured corresponding to contour region in the printing surface, so as to obtain the corresponding contour structure of the pattern cured layer; and
controlling the energy radiation device to perform energy radiation based on the over-curing label of the attachment slice, to over-cure the materials to be cured in the printing surface to obtain the corresponding pattern cured layer.

4. The 3D printing method of claim 3, wherein the step of controlling the energy radiation device to perform energy radiation includes: controlling at least one of the radiation duration, light intensity, and irradiation times of the energy radiation device.

5. The 3D printing method of claim 1, wherein the obtained three-dimensional object comprises at least one of the following attachment objects:
an attachment object configured to enable an external device to identify the assembly position of the manufactured subject object; and
an attachment object configured to enable an external device to identify the configuration information of the manufactured subject object.

6. The 3D printing method of claim 1, wherein the three-dimensional object comprises a tooth, an object containing an information code, or a biological organ.

7. A 3D printing device, comprising:
an energy radiation device, configured to radiate energy to a printing surface based on the acquired sliced data of the three-dimensional object model; wherein the three-dimensional object model comprises a three-dimensional subject model and a three-dimensional attachment model with an attachment relationship; wherein at least part of attachment slices in the three-dimensional attachment model are set with an over-curing property;
a build platform, configured to attach a pattern cured layer that has been cured after radiation by the energy radiation device, so as to form a corresponding three-dimensional object through accumulation of the pattern cured layer;
a Z-axis drive mechanism, connected to the build platform, and configured to adjust spacing between the build platform and the printing surface to fill with materials to be cured; wherein the layer height of the filled materials to be cured corresponds to the layer height of the corresponding subject slice in the three-dimensional subject model, and/or the layer height of the corresponding attachment slice in the three-dimensional attachment model; and
a control device, connected to the Z-axis drive mechanism and the energy device, and cofigured to control the Z-axis drive mechanism and the energy radiation device to print the three-dimensional object;
wherein under the control of the control device, the energy radiation device controls to radiate energy to the filled materials to be cured based on a layered image of the corresponding subject slice in the three-dimensional subject model and/or a layered image of the corresponding attachment slice in the three-dimensional attachment model, to obtain a corresponding pattern cured layer; and
wherein, during the radiation, the energy radiation device performs over-cured radiation on at least part of the layered image of the corresponding attachment slice according to the over-curing property.

8. The 3D printing device of claim 7, further comprising a container, configured to accommodate the materials to be cured;
wherein the energy radiation device is arranged below the bottom surface of the container and radiates energy to the bottom surface of the container, to form the pattern cured layer on the bottom surface of the container; or, the energy radiation device is arranged above the container and radiates energy to the surface of the materials to be cured in the container, to form the pattern cured layer on the surface of the materials to be cured.

9. The 3D printing device of claim 7, wherein the energy radiation device is an energy radiation device based on surface projection, or an energy radiation device based on scanning radiation.

10. The 3D printing device of claim 7, wherein the manner through which the Z-axis drive mechanism adjusts the spacing between the build platform and the printing surface includes any of the following:
the control device controls the Z-axis drive mechanism to adjust the spacing between the build platform and the printing surface based on the unified layer height when the layer heights of the slices in the three-dimensional subject model and the slices in the three-dimensional attachment model are consistent; and
the control device controls the Z-axis drive mechanism to adjust the spacing between the build platform and the printing surface based on the the layered image irradiation sequence set by the layer height of each slice in the three-dimensional subject model and the three-dimensional attachment model when the layer heights of the slices in the three-dimensional subject model and the slices in the three-dimensional attachment model are not consistent.

11. The 3D printing device of claim 7, wherein the manner through which the energy radiation device performs over-cured radiation on at least part of the layered image of the corresponding attachment slice according to the over-curing property comprises any of the following:
the energy radiation device performs energy radiation based on the grayscale value of at least the contour region in the layered image of the attachment slice, to over-cure the materials to be cured corresponding to at least the contour region in the printing surface, so as to obtain a corresponding pattern cured layer;
the energy radiation device performs energy radiation based on the contour mask image of the corresponding contour region in the layered image of the attachment slice, to over-cure the materials to be cured corresponding to the contour region in the printing surface, so as to obtain the corresponding contour structure of the pattern cured layer; and
the energy radiation device is controlled for energy radiation based on the over-curing label of the attachment slice, to over-cure the materials to be cured in the printing surface to obtain the corresponding pattern cured layer.

12. The 3D printing device of claim 11, wherein the manner through which the energy radiation device performs energy radaition comprises: performing energy radiation on corresponding radiation positions according to at least one of the radiation duration, light intensity, and irradiation times set based on over-curing operation.

13. The 3D printing device of claim 7, wherein the manufactured three-dimensional object comprises at least one of the following attachment objects:
an attachment object configured to enable an external device to identify the assembly position of the manufactured subject object; and
an attachment object configured to enable an external device to identify the configuration information of the manufactured subject object.

14. The 3D printing device of claim 7, wherein the three-dimensional object comprises a tooth, an object containing an information code, or a biological organ.
